# EUROPEAN PATENT APPLICATION

(11) **EP 4 701 302 A1**
(43) Date of publication of application: **25.02.2026**
(21) Application number: 23940983.2
(22) Date of filing: 12.06.2023
(51) Int. Cl.: H04W 72/0457

(54) **COMMUNICATION METHOD AND APPARATUS, CHIP SYSTEM, STORAGE MEDIUM, AND COMPUTER PROGRAM PRODUCT**

(71) Applicant: Huawei Technologies Co., Ltd., Shenzhen, Guangdong 518129 (CN)
(72) Inventor: WANG, Xiaolu, Shenzhen, Guangdong 518129 (CN); LUO, Hejia, Shenzhen, Guangdong 518129 (CN); LI, Rong, Shenzhen, Guangdong 518129 (CN); WANG, Jun, Shenzhen, Guangdong 518129 (CN)
(74) Representative: Maiwald GmbH
(86) International application number: PCT/CN2023/099757
(87) International publication number: WO 2024/254745

(57) **Abstract**

A communication method and apparatus, a chip system, a storage medium, and a computer program product are provided, to improve an encoding gain in a data transmission process, thereby improving decoding performance. In this application, a first communication apparatus receives first data, and obtains second data and third data from the first data. The first data includes a first transport block. The first transport block includes the second data and the third data. The second data is mapped to an r^{th} time domain symbol in a first slot. The third data is mapped to an s^{th} time domain symbol in a second slot. r and s are positive integers, and r is not equal to s. Because data in a same transport block is discretized to two different time domain symbols in at least two slots for transmission, when a slot is affected by channel blocking in a data transmission process, only a part of data of one transport block is mapped to the slot. Therefore, the transport block is minimally affected by channel blocking in a decoding process, and a decoding success rate of the transport block is high.

## Description

### TECHNICAL FIELD

This application relates to the field of communication technologies, and in particular, to a communication method and apparatus, a chip system, a storage medium, and a computer program product.

### BACKGROUND

Currently, the 5G new radio (new radio, NR) technology is evolving from R18 to R19. In addition, the NR technology also enters a commercial deployment phase from a standardization phase. The NR standard protocol can be used for wireless communication technologies designed for terrestrial cellular network scenarios, and can provide ultra-low latency, ultra-high reliability, ultra-high speed, and ultra-large connection wireless communication services for users. In comparison with terrestrial communication, non-terrestrial network (non-terrestrial network, NTN) communication has features such as a large coverage area and flexible networking, and can achieve seamless global network coverage. NTN communication includes networking using devices such as an uncrewed aerial vehicle, an air platform, and a satellite, to provide services such as data transmission and voice communication for user equipment (user equipment, UE).

In some communication scenarios (for example, NR or NTN), data transmission between apparatuses is affected, and consequently, a series of problems are caused. For example, in a satellite mobile communication scenario, when a mobile terminal transmits data to a satellite, signals are affected by sudden/short-time blocking caused by a billboard, a street lamp, and the like. As a result, a signal to noise ratio (signal to noise ratio, SNR) of a link suddenly decreases, and blocking duration may reach tens of milliseconds (ms), causing problems such as occurrence of an error floor (error floor), fluctuation of a data transmission rate, and an increase in a quantity (probability) of data retransmissions.

### SUMMARY

This application provides a communication method and apparatus, a chip system, a storage medium, and a computer program product, to improve an encoding gain in a data transmission process, improve decoding performance, reduce occurrence of an error floor, maintain stability of a data transmission rate, reduce a quantity of data retransmissions, and the like.

According to a first aspect, an embodiment of this application provides a communication method. The method may be applicable to a first communication apparatus. The first communication apparatus may be a communication apparatus configured to implement a function of a network device or a terminal. The first communication apparatus may be a terminal or a network device, or may be an apparatus that can support the terminal or the network device in implementing the function, for example, a chip system. The apparatus may be installed in the terminal or the network device.

In the method, the first communication apparatus receives first data, and obtains second data and third data from the first data. The first data includes a first transport block, the first transport block includes the second data and the third data, the second data is mapped to an r^{th} time domain symbol in a first slot, the third data is mapped to an s^{th} time domain symbol in a second slot, r and s are positive integers, and r is not equal to s.

Data in a same transport block may be discretized to two different time domain symbols in at least two slots for transmission. In addition, a receive end collects data that belongs to a same transport block together for decoding and the like. When one or more slots are affected by channel blocking in a data transmission process, only a part of data of one transport block is mapped to the slot. Therefore, the transport block is minimally affected by channel blocking, and a decoding success rate of the transport block is high.

In a possible implementation, fourth data is mapped to the r^{th} time domain symbol in the second slot, and the fourth data is data in a second transport block in the first data. Because data mapped to the r^{th} time domain symbols in the first slot and the second slot corresponds to different transport blocks, a same time domain symbol in different slots may be discretized to different transport blocks. An index value of a time domain symbol used to transmit a reference signal in the first slot is the same as an index value of a time domain symbol used to transmit a reference signal in the second slot. Therefore, reference signals located on a same time domain symbol in different slots may also be discretized to different transport blocks. Further, when a receive end performs decoding based on data of each transport block, because the reference signals are discretized to transport blocks instead of being centralized in one transport block, a difference between encoding lengths of the transport blocks is relatively small, an encoding gain is large, and decoding performance is improved.

In a possible implementation, data of the first transport block is mapped to one time domain symbol in each of M slots, indexes of two time domain symbols in any two slots are not equal, and M is a positive integer. In this way, a degree of discretization of the data of the first transport block may be higher. Subsequently, in a data transmission process, when a slot is affected by channel blocking, because an amount of data of the transport block carried in the slot is small, impact of channel blocking on the transport block can be further reduced.

In a possible implementation, time domain symbols that are in the first slot and that are used to map the reference signals correspond to different transport blocks from time domain symbols that are in the second slot and that are used to map the reference signals. In this way, the reference signals may be discretized to different transport blocks. Further, when a receive end performs decoding based on data of each transport block, because the reference signals are discretized to transport blocks instead of being centralized in one transport block, a difference between encoding lengths of the transport blocks is relatively small, an encoding gain is large, and decoding performance is improved.

In a possible implementation, the first communication apparatus de-interleaves a symbol sequence corresponding to the first data, to obtain the second data and the third data.

For example, the first communication apparatus writes the symbol sequence corresponding to the first data into an M-row and N-column de-interleaver row by row at a granularity of a time domain symbol, and reads the symbol sequence from the de-interleaver column by column. N and M are positive integers.

N is greater than a quantity of time domain symbols included in one slot. In this way, data of a same transport block may be mapped to different time domain symbols in different slots. In addition, a receive end collects data that belongs to a same transport block together for decoding and the like. When one or more slots are affected by channel blocking in a data transmission process, only a part of data of one transport block is mapped to the slot. Therefore, the transport block is minimally affected by channel blocking, and a decoding success rate of the transport block is high.

In a possible implementation, N=a*M+k. Because N is greater than a*M by k, and because one column of the de-interleaver may correspond to data of a same transport block, data of the same transport block may be mapped to different time domain symbols in different slots. Further, when one or more slots are affected by channel blocking in a data transmission process, only a part of data of one transport block is mapped to the slot. Therefore, the transport block is minimally affected by channel blocking, and a decoding success rate of the transport block is high.

In a possible implementation, writing, into the M-row and N-column de-interleaver, modulation symbols corresponding to the first data column by column at the granularity of the time domain symbol may include two manners.

Manner 1: For a w^{th} column of the de-interleaver, a value range of w may be [1, N]. The first communication apparatus reads a symbol sequence from the w^{th} column in a top-to-bottom order of the w^{th} column. The value range of w is [1, N]. In this solution, the base station may perform decoding based on a receiving order of received time domain symbols. This manner is simple.

Manner 2: For a w^{th} column of the de-interleaver, the first communication apparatus reads a symbol sequence from the w^{th} column in a sorting order of index values of time domain symbols corresponding to locations in the w^{th} column. In this solution, a base station may perform decoding based on the order of the index values of the received time domain symbols, and logic is simple.

In a possible implementation, after processing to-be-transmitted data, the first communication apparatus may obtain a symbol sequence *f*₀*, f*₁, *f*₂,..., *f*_{*E-*1}, and de-interleave the symbol sequence *f*₀, *f*₁, *f*₂,..., *f*_{*E-*1} into a symbol sequence *e*₀*,e*₁,*e*₂,*...*,*e*_{*E-*1}*.* The first data includes the symbol sequence *f*₀, *f*₁, *f*₂,..., *f*_{*E-*1}. E=N*M, N=a*M+k, N is 0 or a positive integer, M is 0 or a positive integer, a and k are positive integers, and * represents multiplication. *e_{i*M+j} = f_{i+j*N}*, where *f_{i+j*N}* is an (i+j*N)^{th} element in the symbol sequence *f*₀, *f*₁, *f*₂,*..., f*_{*E-*1}, *e_{i*M+j}* is an (i*M+j)^{th} element in the symbol sequence *e*₀*,e*₁,*e*₂,*...*,*e*_{*E-*1}, a value range of j is [0, (M-1)], a value range of i is [0, (N-1)], and j and i are positive integers.

In a possible implementation, one element in the symbol sequence *f*₀, *f*₁, *f*₂,..., *f*_{*E*-1} includes one time domain symbol, or at least one modulation symbol mapped to one time domain symbol, or demodulation information (for example, soft value information of a decoded bit) of at least one modulation symbol mapped to one time domain symbol.

In a possible implementation, one element in the symbol sequence *e*₀*,e*₁,*e*₂,*...*,*e*_{*E-*1} includes one time domain symbol, or at least one modulation symbol mapped to one time domain symbol, or demodulation information (for example, soft value information of a decoded bit) of at least one modulation symbol mapped to one time domain symbol.

In a possible implementation, k is 1. Time domain symbols whose index values are the same in each slot may be more evenly distributed in each transport block. For example, time domain symbols whose index values are 3 in each slot may be evenly distributed in each transport block. Because the reference signals may be distributed in several fixed time domain symbols in a slot (for example, time domain symbols whose index values are 3 in each slot are used to carry the reference signals), when a value of k is 1, the reference signals may be more evenly distributed in each column of the entire interleaver.

In a possible implementation, M is determined based on at least one of the following: a quantity of time domain symbols occupied by the first transport block, a quantity of time domain symbols included in the slot, a quantity of time domain symbols occupied by control information, or a quantity of time domain symbols occupied by a broadcast message. In this way, different time domain symbols carrying the transport block information can be distributed to different slots, to ensure a large interleaving depth and improve decoding performance of the receive end.

In a possible implementation, a value of N is determined based on channel blocking duration. In this way, the same transport block information may not be completely blocked by a channel, thereby improving decoding performance of the receive end.

In a possible implementation, the first communication apparatus obtains first information. The first information indicates information about at least one of the following: start time for de-interleaving a symbol sequence corresponding to received data; stop time for de-interleaving a symbol sequence corresponding to received data; duration (or referred to as a time length or a timer length) for de-interleaving a symbol sequence corresponding to received data; start time for interleaving a symbol sequence corresponding to to-be-sent data; stop time for interleaving a symbol sequence corresponding to to-be-sent data; or duration (or referred to as a time length or a timer length) for interleaving a symbol sequence corresponding to to-be-sent data.

In this way, the first communication apparatus may enable interleaving (and/or de-interleaving) processing on the symbol sequence when arriving at the start time. This solution may limit time for enabling interleaving (and/or de-interleaving) processing on the symbol sequence by the first communication apparatus, to improve management and control flexibility. In another possible implementation, the content (for example, the start time for enabling interleaving (and/or de-interleaving) processing on the symbol sequence) may be further determined based on a change of channel blocking occurrence time. In this way, interleaving and/or de-interleaving of the first communication apparatus may be managed and controlled in a timely manner, to avoid additional processing complexity.

In addition, in this solution, a time length for enabling interleaving (and/or de-interleaving) processing on the symbol sequence by the first communication apparatus can be limited, thereby improving control flexibility and avoiding additional signal processing complexity. For example, a time length for using the solution of this application (enabling interleaving (and/or de-interleaving) processing on the symbol sequence) may be configured based on a time period in which channel blocking occurs, and the solution of this application is stopped in a timely manner when blocking does not occur, thereby avoiding additional signal processing complexity.

In a possible implementation, the first communication apparatus receives configuration information. The configuration information is used to configure a second parameter. The second parameter includes at least one of the following: a first parameter; time domain resource information of the first data; frequency domain resource information of the first data, polarization information of the first data; de-interleaving the symbol sequence corresponding to the received data; or interleaving the symbol sequence corresponding to the to-be-sent data. The first parameter is used to de-interleave a symbol sequence corresponding to the first data.

In a possible implementation, the first parameter includes M and N.

In a possible implementation, the configuration information is carried in system information, a radio resource control (radio resource control, RRC) message, a broadcast message, downlink control information, or media access control signaling.

In a possible implementation, the first communication apparatus obtains an association relationship between a bandwidth part (bandwidth part, BWP) and a second parameter. The first communication apparatus determines, based on the association relationship between the BWP and the second parameter and a BWP used by the first communication apparatus, the second parameter used to perform interleaving on the symbol sequence *e*₀*,e*₁,*e*₂,*...*,*e*_{*E-*1}*.*

In another possible implementation, the second parameter may alternatively include information that indicates that the symbol sequence corresponding to the received data is not de-interleaved. In this case, the first communication apparatus may determine, based on the second parameter, that symbol-level de-interleaving does not need to be performed on the symbol sequence *e*₀*,e*₁,*e*₂,*...*,*e*_{*E-*1}.

In a possible implementation, the first communication apparatus may perform subcarrier de-interleaving on modulation symbols in a time domain first and frequency domain second order. In this application, subcarrier de-interleaving may be considered as reverse processing of subcarrier interleaving, and subcarrier interleaving is also performed in a time domain first and frequency domain second order. In this way, modulation symbols on the time domain symbol affected by burst blocking may be further discretized to each time domain symbol, so that impact of burst blocking on different transport blocks can be further equalized.

In another possible implementation, the first communication apparatus may perform subcarrier de-interleaving on the symbol sequence g₀,g₁,g₂,...,g_{F-1} corresponding to the first data to obtain a symbol sequence *h*₀,*h*₁,*h*₂,...,*h*_{F-1}, where F=P*Q, P and Q are positive integers, and * represents multiplication. *h_{p*Q+q}* = g*_{p+q*P}*, where g_{*p*+*q***P*} is a (p+j*P)^{th} element in the symbol sequence g₀,g₁,g₂,...,g_{F-1}, *h_{p*Q+q}* is a (p*Q+q)^{th} element in the symbol sequence *h*₀,*h*₁,*h*₂*,...,h*_{F*-*1}*,* a value range of q is [0, (Q-1)], a value range of p is [0, (P-1)], and q and p are positive integers.

In a possible implementation, a granularity of subcarrier de-interleaving includes a resource element (resource element, RE), an RE group, a subcarrier group, or a resource block (resource block, RB).

According to a second aspect, an embodiment of this application provides a communication method. The method may be applicable to a second communication apparatus. The second communication apparatus may be a communication apparatus configured to implement a function of a network device or a terminal. The second communication apparatus may be a terminal or a network device, or may be an apparatus that can support the terminal or the network device in implementing the function, for example, a chip system. The apparatus may be installed in the terminal or the network device.

The second communication apparatus obtains first data, and sends the first data. The first data includes a first transport block, the first transport block includes second data and third data, the second data is mapped to an r^{th} time domain symbol in a first slot, the third data is mapped to an s^{th} time domain symbol in a second slot, r and s are positive integers, and r is not equal to s.

Data in a same transport block may be discretized to two different time domain symbols in at least two slots for transmission. In addition, a receive end collects data that belongs to a same transport block together for decoding and the like. When one or more slots are affected by channel blocking in a data transmission process, only a part of data of one transport block is mapped to the slot. Therefore, the transport block is minimally affected by channel blocking, and a decoding success rate of the transport block is high.

In a possible implementation, fourth data is mapped to the r^{th} time domain symbol in the second slot, and the fourth data is data in a second transport block in the first data.

In a possible implementation, data of the first transport block is mapped to one time domain symbol in each of M slots, indexes of two time domain symbols in any two slots are not equal, and M is a positive integer.

In a possible implementation, time domain symbols that are in the first slot and that are used to map the reference signals correspond to different transport blocks from time domain symbols that are in the second slot and that are used to map the reference signals.

In a possible implementation, an index value of a time domain symbol used to transmit a reference signal in the first slot is the same as an index value of a time domain symbol used to transmit a reference signal in the second slot.

In a possible implementation, the second communication apparatus writes a symbol sequence corresponding to the first data into an M-row and N-column interleaver column by column at a granularity of a time domain symbol, and reads content carried on a time domain symbol row by row from the interleaver, to obtain the symbol sequence. N and M are positive integers. N may be greater than a quantity of time domain symbols included in one slot. For a basis for values of M and N, refer to related content in the first aspect. Details are not described again.

In a possible implementation, after obtaining the first data, the second communication apparatus may interleave the symbol sequence. An interleaving process may include two manners.

Manner 1: For a w^{th} column of an interleaver, the second communication apparatus writes a symbol sequence into the w^{th} column in a top-to-bottom order of the w^{th} column. A value range of w is [1, N]. In this application, a value range of w may be [1, N].

Manner 2: For a w^{th} column of the interleaver, the second communication apparatus writes a symbol sequence into the w^{th} column in a sorting order of index values of time domain symbols corresponding to locations in the w^{th} column.

In a possible implementation, the second communication apparatus may interleave a symbol sequence *e*₀*,e*₁,*e*₂,*...*,*e*_{*E-*1} into a symbol sequence *f*₀*, f*₁, *f*₂,*...*, *f*_{*E-*1}. For the symbol sequence *f*₀*, f*₁, *f*₂,*...*, *f*_{*E-*1} and the parameter of the symbol sequence *e*₀,*e*₁,*e*₂,*...*,*e*_{*E-*1}, refer to related content in the first aspect. Details are not described again.

In a possible implementation, k is 1.

In a possible implementation, the second communication apparatus obtains first information and/or configuration information. For related content of the first information and the configuration information, refer to the foregoing descriptions. Details are not described again.

In a possible implementation, the second communication apparatus obtains an association relationship between a BWP and a second parameter. The second communication apparatus determines, based on the association relationship between the BWP and the second parameter and a BWP used by the first communication apparatus, the second parameter used to interleave the symbol sequence corresponding to the first data. For related content of the second parameter, refer to the foregoing descriptions. Details are not described again.

In a possible implementation, after receiving the first data, the second communication apparatus may perform subcarrier interleaving on the symbol sequence corresponding to the first data in a time domain first and frequency domain second order.

In a possible implementation, after receiving the first data, the second communication apparatus may perform subcarrier interleaving on the symbol sequence *h*₀*,h*₁,*h*₂*,...*,*h*_{F*-*1} corresponding to the first data to obtain the symbol sequence g₀,g₁,g₂,...,g_{F-1}. For the symbol sequence g₀,g₁,g₂,...,g_{F-1} and the parameter of the symbol sequence *h*₀,*h*₁,*h*₂,...,*h*_{*F-*1}, refer to related content in the first aspect. Details are not described again.

In a possible implementation, the symbol sequence *h*₀*,h*₁,*h*₂,*...*,*h*_{F*-*1} corresponding to the first data includes a symbol sequence *h*₀,*h*₁,*h*₂*,...,h*_{F-1} carried by N elements in the symbol sequence corresponding to the first data. The N elements in the symbol sequence corresponding to the first data include N time domain symbols in the symbol sequence corresponding to the first data, or at least one modulation symbol mapped to the N time domain symbols, or demodulation information (for example, soft value information of a decoded bit) of at least one modulation symbol mapped to the N time domain symbols.

In a possible implementation, the second communication apparatus may perform subcarrier interleaving on the symbol sequence corresponding to the first data. A t^{th} element and a (t+1)^{th} element in the symbol sequence corresponding to the first data meet the following condition, where t is a positive integer: An index value of a resource location corresponding to the t^{th} element before subcarrier interleaving is performed is (x, y), x is a time domain symbol index, and y is a subcarrier index. An index value of a resource location corresponding to the (t+1)^{th} element before subcarrier interleaving is (mod (x, X)+1, mod (y, Y)+1). (mod (x, X))+1 is a time domain symbol index, (mod (y, Y) +1) is a subcarrier index, X is a quantity of time domain symbols included in a j^{th} row, and Y is a quantity of subcarriers included in time domain symbols included in the j^{th} row.

In a possible implementation, a granularity of subcarrier interleaving includes an RE, an RE group, a subcarrier group, or an RB.

For related descriptions and beneficial effect, refer to the foregoing content. Details are not described again.

According to a third aspect, a communication apparatus is provided. The communication apparatus may be the first communication apparatus or the second communication apparatus. The communication apparatus may include a communication unit and a processing unit, to perform any one of the first aspect and the second aspect or any possible implementation of the first aspect and the second aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that can be configured to perform any one of the first aspect and the second aspect or any possible implementation of the first aspect and the second aspect.

According to a fourth aspect, a communication apparatus is provided. The communication apparatus may be the first communication apparatus or the second communication apparatus. The communication apparatus may include a processor and a memory, to perform any one of the first aspect and the second aspect or any possible implementation of the first aspect and the second aspect. Optionally, the communication apparatus further includes a transceiver. The memory is configured to store a computer program or instructions. The processor is configured to invoke the computer program or the instructions from the memory and run the computer program or the instructions. When the processor runs the computer program or the instructions in the memory, the communication apparatus is enabled to perform any one of the first aspect and the second aspect or any one of the possible implementations of the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect, a communication apparatus is provided. The communication apparatus may be the first communication apparatus or the second communication apparatus. The communication apparatus may include a processor, to perform any one of the first aspect and the second aspect or any possible implementation of the first aspect and the second aspect. The processor is coupled to a memory. Optionally, the communication apparatus further includes the memory. Optionally, the communication apparatus further includes a communication interface, and the processor is coupled to the communication interface.

In an implementation, when the communication apparatus is the first communication apparatus or the second communication apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a system is provided. The system includes the first communication apparatus.

In a possible implementation, the system may further include the second communication apparatus. In another possible implementation, the system may further include one or more terminal apparatuses. In another possible implementation, the system may further include one or more location management apparatuses.

According to a seventh aspect, a computer program product is provided. The computer program product includes a computer program (which may also be referred to as code or instructions). When the computer program is run, a computer is enabled to perform any one of the first aspect and the second aspect or any possible implementation of the first aspect and the second aspect.

According to an eighth aspect, a computer-readable storage medium is provided. The computer-readable storage medium stores a computer program (which may also be referred to as code or instructions). When the computer program is run on a computer, the computer is enabled to perform any one of the first aspect and the second aspect or any possible implementation of the first aspect and the second aspect.

According to a ninth aspect, a chip system is provided. The chip system may include a processor. The processor is coupled to a memory, and may be configured to: perform either of the first aspect and the second aspect or any possible implementation of the first aspect and the second aspect. Optionally, the chip system further includes the memory. The memory is configured to store a computer program (which may also be referred to as code or instructions). The processor is configured to: invoke the computer program from the memory and run the computer program, so that a device on which the chip system is installed performs either of the first aspect and the second aspect, or performs any one of the possible implementations of the first aspect and the second aspect.

According to a tenth aspect, a processing apparatus is provided, including an interface circuit and a processing circuit. The interface circuit may include an input circuit and an output circuit. The processing circuit is configured to: receive a signal through the input circuit, and transmit a signal through the output circuit, so that either of the first aspect and the second aspect or any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, the communication apparatus is the first communication apparatus, the second communication apparatus, or a positioning management apparatus. The interface circuit may be a radio frequency processing chip in the first communication apparatus, the second communication apparatus, or the positioning management apparatus, and the processing circuit may be a baseband processing chip in the first communication apparatus, the second communication apparatus, or the positioning management apparatus.

In another implementation, the communication apparatus may be some components in the first communication apparatus, the second communication apparatus, or the positioning management apparatus, for example, integrated circuit products such as a system chip or a communication chip. The interface circuit may be an input/output interface, an interface circuit, an output circuit, an input circuit, a pin, a related circuit, or the like on the chip or a chip system. The processing circuit may be a logic circuit on the chip.

### BRIEF DESCRIPTION OF DRAWINGS

FIG. 1 is a diagram of an architecture of a communication system to which an embodiment of this application is applicable;
FIG. 2 is a diagram of a network architecture of another communication system to which an embodiment of this application is applicable;
FIG. 3 is a diagram of a network architecture of still another communication system to which an embodiment of this application is applicable;
FIG. 4 is a schematic flowchart of a communication method according to an embodiment of this application;
FIG. 5 is a diagram of an interleaver according to an embodiment of this application;
FIG. 6 is a diagram of an interleaver according to an embodiment of this application;
FIG. 7 is a diagram of a simulation result according to an embodiment of this application;
FIG. 8 is a diagram of several communication solutions according to an embodiment of this application;
FIG. 9 is a diagram of several communication solutions according to an embodiment of this application;
FIG. 10 is a schematic flowchart of a communication method according to an embodiment of this application;
FIG. 11 is a diagram of an association relationship between a BWP and a second parameter according to an embodiment of this application;
FIG. 12 is a diagram of several communication solutions according to an embodiment of this application;
FIG. 13 is a diagram of several communication solutions according to an embodiment of this application;
FIG. 14 is a diagram of an interleaver according to an embodiment of this application;
FIG. 15 is a diagram of an interleaver according to an embodiment of this application;
FIG. 16 is a diagram of a communication apparatus according to an embodiment of this application; and
FIG. 17 is a diagram of another communication apparatus according to an embodiment of this application.

### DESCRIPTION OF EMBODIMENTS

The following first describes nouns or terms in embodiments of this application.

### (1) Transport block

A transport block (transport block, TB) is a volume unit for transmitting data, and is a basic data unit exchanged between a physical layer and a media access control (Media Access Control, MAC) layer.

In embodiments of this application, data and/or information (the data and/or information may alternatively be replaced with a payload (payload)) carried in the transport block may be mapped to one or more time domain symbols. For example, data and/or information carried in one transport block is mapped to 14 time domain symbols.

In embodiments of this application, the data and/or information (the data and/or information may alternatively be replaced with the payload (payload)) carried in the transport block may also be modulated to one or more modulation symbols.

In embodiments of this application, a first transport block and a second transport block are two different transport blocks, and "first" and "second" are used for distinguishing and have no other meaning.

### (2) Modulation symbol

The modulation symbol may be understood as a symbol obtained by transforming an electrical signal. For example, some feature values (for example, an amplitude, a frequency, and a phase) of a signal B are transformed based on a feature of a signal A, and a transformed signal B is obtained. The transformed signal B (or a corresponding symbol) may be referred to as a modulation symbol.

The modulation symbol may include, for example, a quadrature amplitude modulation (quadrature amplitude modulation, QAM) symbol or a quadrature phase shift keying (quadrature phase shift keying, QPSK) symbol. In embodiment of this application, the modulation symbol may alternatively be replaced with a modulation signal, a QAM symbol, a QPSK symbol, or the like.

In embodiments of this application, one or more bits (or encoded bits) may be mapped to one modulation symbol. For ease of understanding, an example in which one modulation symbol is one QAM symbol is used for description in embodiments of this application. The one modulation symbol may alternatively be understood as other content, for example, one QPSK symbol. Related content is similar, and details are not described again.

### (3) Time unit

A time domain resource may include a time unit. The time unit may be a slot (slot), a mini-slot (mini-slot), a symbol (symbol), or another time domain granularity (for example, a system frame (frame) or a subframe (subframe)). One slot may include at least one symbol, for example, 14 symbols or 12 symbols. In this application, a slot is used as an example for description. However, this application is not limited to an implementation of the slot.

In embodiments of this application, all time domain symbols included in one slot may be used to carry a physical downlink shared channel (physical downlink shared channel, PDSCH) (or data on the PDSCH); or some time domain symbols in the slot are used to carry a PDSCH (for example, data on the PDSCH), and another part is used to carry a physical downlink control channel (physical downlink control channel, PDSCH) (for example, information on the PDCCH).

Alternatively, in embodiments of this application, all time domain symbols included in one slot may be used to carry a physical uplink shared channel (physical uplink shared channel, PDSCH) (or data on the PDSCH); or some time domain symbols in the slot are used to carry a PDSCH (for example, data on the PDSCH), and another part is used to carry a physical uplink control channel (physical uplink control channel, PDSCH) (for example, information on the PDCCH).

### (4) Index value of a time domain symbol and identifier of a time domain symbol

In embodiments of this application, the time domain symbol may be an orthogonal frequency division multiplexing (orthogonal frequency division multiplexing, OFDM) symbol, a discrete Fourier transform spread OFDM (discrete Fourier transform spread OFDM, DFT-s-OFDM) symbol, a filter bank multicarrier (filter bank multicarrier, FBMC) symbol, an orthogonal time frequency space (orthogonal time frequency space, OTFS) symbol, or the like. For ease of understanding, an example in which one time domain symbol is one OFDM symbol is used for description in embodiments of this application. The one time domain symbol may alternatively be understood as other content, for example, one OTFS symbol. Related content is similar, and details are not described again.

For ease of description, in embodiments of this application, two parameters are defined to identify a time domain symbol: an index value of the time domain symbol and an identifier of the time domain symbol. A difference lies in that the index value of the time domain symbol may be understood as identification information in a slot (for example, may be sorting of the time domain symbol in the slot); and the identifier of the time domain symbol may be understood as global identification information of the time domain symbol. The two terms may alternatively have other names. For example, the index value of the time domain symbol may be referred to as first identification information of the time domain symbol, and the identifier of the time domain symbol may be referred to as second identification information of the time domain symbol.

### (4.1) Index value of a time domain symbol

The index value of the time domain symbol may be understood as sorting of the time domain symbol in all time domain symbols in the slot. For example, if the index value of the time domain symbol in the slot is 1, it may indicate that the time domain symbol is a first time domain symbol in the slot; or if the index value of the time domain symbol in the slot is 2, it may indicate that the time domain symbol is a second time domain symbol in the slot. In another possible example, if the index value of the time domain symbol in the slot is 0, it may indicate that the time domain symbol is a first time domain symbol (or a 0^{th} time domain symbol) in the slot; or if the index value of the time domain symbol in the slot is 1, it may indicate that the time domain symbol is a second time domain symbol (or the 1^{st} time domain symbol) in the slot.

### (4.1) Identifier of a time domain symbol

The identifier of the time domain symbol may be used to identify the time domain symbol. The identifier of the time domain symbol may be the same as or different from the index value of the time domain symbol. For example, if the index value of the time domain symbol in the slot is 1, it may indicate that the time domain symbol is a first time domain symbol in the slot, and an identifier of the time domain symbol may be a time domain symbol #1, a time domain symbol #0, or another identifier (for example, a time domain symbol #15).

### (5) Reference signal

The reference signal in embodiments of this application may include a demodulation reference signal (demodulation reference signal, DMRS), or may include another reference signal, for example, one or more of a phase tracking reference signal (phase tracking reference signal, PTRS), a channel state information reference signal (channel state information reference signal, CSI-RS), a sounding reference signal (sounding reference signal, SRS), a tracking reference signal (tracking reference signal, TRS), or a synchronization signal and PBCH block (synchronization signal and PBCH block, SSB).

### (6) Interleaver and de-interleaver

The interleaver may be understood as a storage or signal processing module (or chip system), and may be configured to rearrange and separate data (bits, modulation symbols, slots, time domain symbols, or data corresponding to frames). For example, after data in one TB is processed by the interleaver, the data in the TB is discretized to a plurality of slots for transmission.

The de-interleaver may be understood as a module (or a chip system) configured to de-interleave interleaved or data. A processing process of the de-interleaver may be understood as an inverse process of the processing process of the interleaver.

### (7) BWP

A BWP technology is added to the new radio (new radio, NR) standard protocol. A BWP includes a bridge between cell-level (terminals in a same cell use a same configuration parameter) and terminal-level (different parameters may be configured for each terminal) resource configuration scheduling and a physical layer parameter set (numerology) (including a subcarrier spacing, a cyclic prefix (cyclic prefix, CP) length, and the like). The BWP has the following features:
(1) A base station can configure a maximum of four downlink BWPs and four uplink BWPs for a terminal.
(2) In an initial access phase, the terminal uses an initial (initial) BWP to receive a system broadcast message and random access-related information.
(3) After accessing a system, the terminal may be switched to another BWP. A subcarrier spacing, a CP type, and the like of each BWP may be differentially configured to adapt to different services.

The technical solutions provided in embodiments of this application may be applied to an NR system, a long term evolution (long term evolution, LTE) system, a non-terrestrial network (non-terrestrial network, NTN) system, a next-generation mobile communication system, or another similar communication system. The technical solutions provided in embodiments of this application may be further applied to a vehicle-to-everything (vehicle-to-everything, V2X) system, an internet of things (Internet of things, IoT) system, and the like.

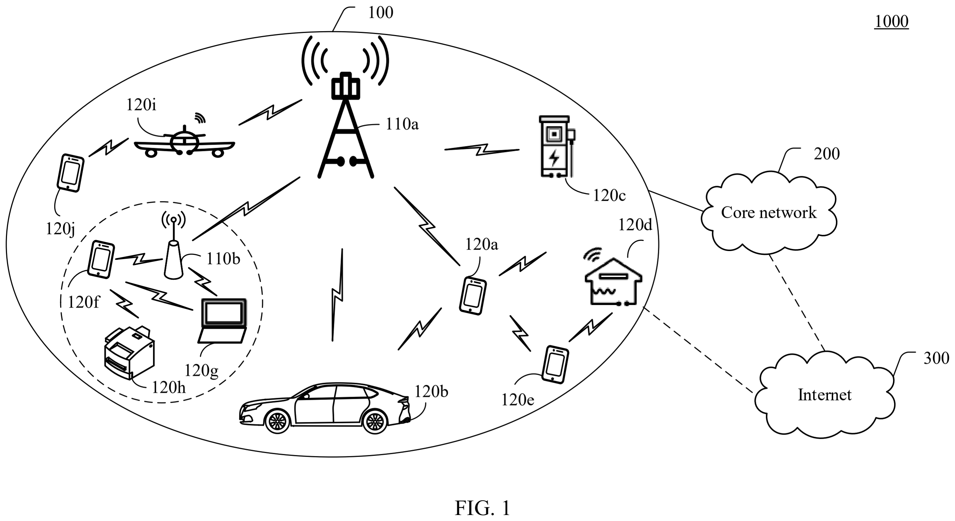

In an example, FIG. 1 is a diagram of an architecture of a communication system 1000 to which an embodiment of this application is applicable. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner and RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may alternatively be an open RAN (open RAN, O-RAN).

The RAN node is also referred to as a radio access network device, a RAN entity, or an access node, and is used to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have a different name. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses a base station as an example of the RAN node for description.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A terminal function may be performed by a module (for example, a chip or a modem) in the terminal, or may be performed by an apparatus including the terminal function.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

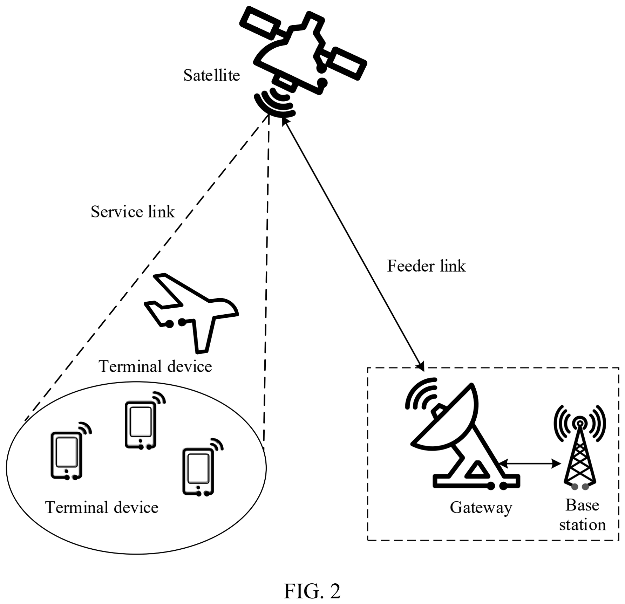

In another example, FIG. 2 is a diagram of a network architecture of another communication system to which an embodiment of this application is applicable. The communication system includes a satellite, a terminal device, and a gateway. The satellite may be a highly elliptical orbit (highly elliptical orbit, HEO) satellite, a geostationary earth orbit satellite (geosynchronous earth orbit, GEO) satellite, a medium earth orbit (medium earth orbit, MEO) satellite, or a low-earth orbit (low-earth orbit, LEO) satellite. In addition, an NTN system may further include a high-altitude platform station (high-altitude platform station, HAPS) and the like. This is not limited herein. The gateway (gateway) (or referred to as a terrestrial station, an earth station, a signal gateway station, or a gateway station) may be used to connect the satellite and a terrestrial base station gateway station/signal gateway station (gateway). One or more satellites may be connected to one or more terrestrial base stations through one or more gateways. This is not limited herein. The terminal device includes, for example, mobile phones, an airplane, and the like (which are used as an example in FIG. 2). A link between the satellite and the terminal device is referred to as a service link (service link), and a link between the satellite and the gateway is referred to as a feeder link (feeder link).

An operation mode of the satellite is not limited in embodiments of this application. For example, the operation mode of the satellite may be a transparent (transparent) mode, or may be a regenerative (regenerative) mode.

In the transparent transmission mode, the satellite, as an analog radio frequency repeater, has a relay forwarding function, can implement radio frequency conversion and amplification, and can transparently transmit or replicate a signal between the base station and the terminal device. For example, a signal sent by the terminal device may be transparently transmitted via the satellite and forwarded by the gateway to the terrestrial base station. The gateway has a part or all of functions of the base station. In this case, the gateway may be considered as a base station. It may be considered that a network element and the base station may be deployed together or separately. If the gateway and the base station are separately deployed, a delay of the feeder link includes a delay from the satellite to the gateway and a delay from the gateway to the base station.

In the regenerative mode, the satellite, as a base station for wireless communication, has a part or all of functions of the base station, implements regeneration of signals received from the ground, and may understand and process these signals. For example, the satellite may be a base station mounted on an artificial earth satellite or a high-altitude aircraft. For example, the base station may be an evolved NodeB (eNB) or a 5G base station (gNB). The gateway may forward signaling between the satellite (namely, the base station) and a core network.

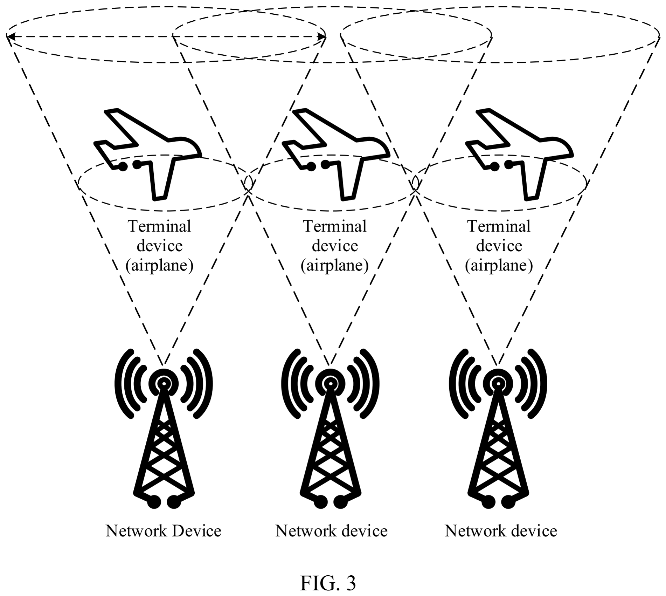

It may be understood that, embodiments of this application are also applicable to an air-to-ground (air-to-ground, ATG) communication system. In an example, FIG. 3 is a diagram of a network architecture of still another communication system to which an embodiment of this application is applicable. The communication system includes at least one network device and at least one high-altitude terminal device. The high-altitude terminal device includes, for example, a high-altitude aircraft and an on-board terminal device.

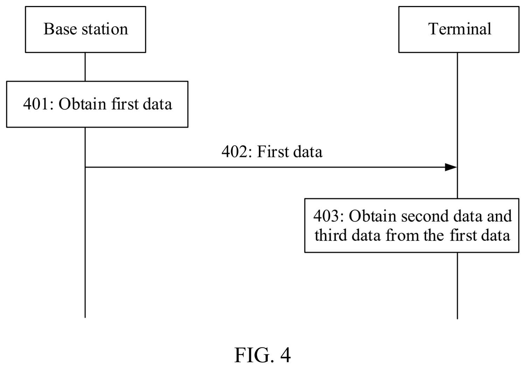

Based on the embodiments shown in FIG. 1, FIG. 2, and FIG. 3 and the foregoing other content, FIG. 4 is an example of a schematic flowchart of a communication method according to an embodiment of this application.

For ease of understanding, FIG. 4 is described from a perspective of interaction between apparatuses. In FIG. 4, a first communication apparatus may be a communication apparatus configured to implement a function of a network device or a terminal, and a second communication apparatus may be a communication apparatus configured to implement a function of a network device or a terminal. For example, the first communication apparatus is a communication apparatus configured to implement the function of the network device, and the second communication apparatus is a communication apparatus configured to implement the function of the terminal. For another example, the first communication apparatus is a communication apparatus configured to implement the function of the terminal, and the second communication apparatus is a communication apparatus configured to implement the function of the network device. For another example, both the first communication apparatus and the second communication apparatus are communication apparatuses configured to implement the function of the network device. For another example, both the first communication apparatus and the second communication apparatus are communication apparatuses configured to implement the function of the terminal device.

In embodiments of this application, a communication apparatus configured to implement a function of a network device may be the network device in FIG. 1, FIG. 2, or FIG. 3, or may be an apparatus that can support the network device in implementing the function, for example, a chip system. The apparatus may be mounted in the network device. A communication apparatus configured to implement a function of a terminal may be the terminal in FIG. 1, FIG. 2, or FIG. 3, or may be an apparatus that can support the terminal in implementing the function, for example, a chip system. The apparatus may be mounted in the terminal. In embodiments of this application, an example in which the first communication apparatus is a terminal and the second communication apparatus is a network device (for example, a base station) is used for description. In embodiments of this application, the terminal may be replaced with the first communication apparatus, and the base station may be replaced with the second communication apparatus.

In embodiments of this application, the first communication apparatus may send data to the second communication apparatus (that is, the first communication apparatus is a transmit end, and the second communication apparatus is a receive end), and the second communication apparatus may also send data to the first communication apparatus (that is, the second communication apparatus is a transmit end, and the first communication apparatus is a receive end). In embodiments of this application, an example in which the second communication apparatus sends first data to the first communication apparatus is used for description. The solutions provided in embodiments of this application are also applicable to a scenario in which the first communication apparatus sends the data to the second communication apparatus. For a solution on a first communication apparatus side in the scenario, refer to a solution on a transmit end (base station) side in embodiments of this application. For a solution on a second communication apparatus side in the scenario, refer to a solution on a receive end (terminal) side in embodiments of this application. Details are not described again.

As shown in FIG. 4, the method includes the following steps.

Step 401: A base station obtains first data.

Step 402: The base station sends the first data.

Correspondingly, a terminal receives the first data.

The first data includes a first transport block, the first transport block includes second data and third data, the second data is mapped to an r^{th} time domain symbol in a first slot, the third data is mapped to an s^{th} time domain symbol in a second slot, r and s are positive integers, and r is not equal to s. In this embodiment of this application, the r^{th} time domain symbol and the s^{th} time domain symbol may be understood as index values of time domain symbols. For example, the r^{th} time domain symbol in the first slot may be understood as a time domain symbol whose index value is r in the first slot, and the s^{th} time domain symbol in the second slot may be understood as a time domain symbol whose index value is s in the second slot. The first slot and the second slot are two different slots.

Step 403: The terminal obtains the second data and the third data from the first data.

According to the solution provided in this embodiment of this application, data in a same transport block may be discretized to two different time domain symbols in at least two slots for transmission. In addition, a receive end collects data that belongs to a same transport block together for decoding and the like. When one or more slots are affected by channel blocking in a data transmission process, only a part of data of one transport block is mapped to the slot. Therefore, the transport block is minimally affected by channel blocking, and a decoding success rate of the transport block is high. It can be learned that the solution provided in this embodiment of this application can improve the data decoding success rate and improve decoding performance. Therefore, when the terminal communicates with the base station (for example, in a scenario in which communication between the terminal and the base station (for example, a satellite) is affected by a billboard, a street lamp, or the like) by using the solution provided in this application, occurrence of an error floor can be avoided, a stable data transmission rate can be maintained, a quantity of data retransmissions can be reduced, and the like.

Further, because the data in the same transport block may be discretized to two different time domain symbols in the at least two slots for transmission, reference signals mapped to slots are also discretized to a plurality of transport blocks. Therefore, when the receive end performs decoding based on data of the transport blocks, because the reference signals are discretized to the transport blocks instead of being centralized in one transport block, a difference between encoding lengths of the transport blocks is small, an encoding gain is large, and decoding performance is improved.

The following further describes several extended embodiments of the embodiment shown in FIG. 4.

In a possible implementation, a plurality of time domain symbols with different index values in different slots in this embodiment of this application may be assigned into a same transport block. Time domain symbols with a same index value in different slots may be discretized to different transport blocks. For example, fourth data is mapped to an r^{th} time domain symbol (the time domain symbol may also be referred to as a time domain symbol whose index value is r in the second slot) in the second slot, and the fourth data belongs to data in a second transport block in the first data. Because the second data of the first transport block is mapped to the r^{th} time domain symbol in the first slot, it can be learned that the data mapped to the r^{th} time domain symbol in the first slot and the data mapped to the r^{th} time domain symbol in the second slot correspond to different transport blocks. Therefore, time domain symbols with a same index value in different slots may be discretized to different transport blocks.

In addition, a reference signal is usually mapped to several fixed time domain symbols in different slots. For example, an index value of a time domain symbol used to transmit a reference signal in the first slot is the same as an index value of a time domain symbol used to transmit a reference signal in the second slot (for example, a third time domain symbol and a twelfth time domain symbol in each slot are used to map the reference signal). In addition, because time domain symbols with a same index value in different slots may be discretized to symbol sequences corresponding to different transport blocks, according to the solution in this application, the reference signals may be discretized to time domain symbol sequences corresponding to different transport blocks (for example, a time domain symbol used to map a reference signal in the first slot and a time domain symbol used to map a reference signal in the second slot belong to symbol sequences corresponding to different transport blocks). Therefore, when the receive end performs decoding based on data of each transport block, because the reference signals are discretized into transport blocks instead of being centralized in one transport block, a difference between encoding lengths of the transport blocks is small, an encoding gain is large, and decoding performance is improved.

In this embodiment of this application, a symbol sequence corresponding to a transport block (for example, the first transport block) may be a symbol sequence obtained by processing data of the transport block. The symbol sequence may be a sequence including a plurality of elements. One element includes one time domain symbol (the time domain symbol may map data in the transport block), or at least one modulation symbol mapped to one time domain symbol (the modulation symbol may include a modulation symbol obtained by modulating the transport block), or demodulation information of at least one modulation symbol mapped to one time domain symbol (the demodulation information may include information obtained by demodulating the modulation symbol obtained by modulating the transport block). The demodulation information in this embodiment of this application may include, for example, soft value information of a decoded bit. The soft value information is information whose value may include 0, 1, and a value other than 0 and 1. The soft value information may be understood as a probability value.

In the embodiment shown in FIG. 4, in a possible implementation, the base station may interleave a symbol sequence *e*₀*,e*₁,*e*₂,*...*,*e*_{*E-*1} into a symbol sequence *f*₀*, f*₁, *f*₂,*...*, *f*_{*E-*1}. The first data includes the symbol sequence *f*₀*, f*₁, *f*₂,*...*, *f*_{*E-*1}. It may also be understood that after obtaining the symbol sequence *e*₀*,e*₁,*e*₂,*...*,*e*_{*E-*1}, the base station interleaves the symbol sequence *e*₀*,e*₁,*e*₂,*...*,*e*_{*E-*1} to obtain the symbol sequence *f*₀*, f*₁, *f*₂,*...*, *f*_{*E-*1}. The base station may obtain the first data based on the symbol sequence *f*₀*, f*₁, *f*₂,*...*, *f*_{*E-*1}. For example, the base station performs some processing (for example, an operation of adding a CP) on the symbol sequence *f*₀*, f*₁, *f*₂,*...*, *f*_{*E-*1} to obtain the first data.

Correspondingly, after obtaining the first data, the terminal may perform some processing on the data, to obtain the symbol sequence *f*₀*, f*₁, *f*₂,*...*, *f*_{*E-*1}. Further, the terminal may de-interleave the symbol sequence *f*₀*, f*₁, *f*₂,*...*, *f*_{*E-*1}, to obtain the symbol sequence *e*₀*,e*₁,*e*₂,*...*,*e*_{*E-*1}. Then, the terminal may obtain a decoded bit based on the symbol sequence *e*₀*,e*₁,*e*₂,*...*,*e*_{*E-*1}*.*

In this embodiment of this application, one element in the symbol sequence *f*₀, *f*₁, *f*₂,*...*, *f*_{*E-*1} may include one time domain symbol, at least one modulation symbol mapped to one time domain symbol, or demodulation information (for example, soft value information of a decoded bit) of at least one modulation symbol mapped to one time domain symbol. One element in the symbol sequence *e*₀,*e*₁,*e*₂,*...*,*e*_{*E-*1} may include one time domain symbol, at least one modulation symbol mapped to one time domain symbol, or demodulation information (for example, soft value information of a decoded bit) of at least one modulation symbol mapped to one time domain symbol. When an element in the symbol sequence *e*₀,*e*₁,*e*₂,*...*,*e*_{*E-*1} (or the symbol sequence *f*₀, *f*₁, *f*₂,*...*, *f*_{*E-*1}) includes at least one modulation symbol (or demodulation information) mapped to one time domain symbol, quantities of modulation symbols corresponding to two elements in the symbol sequence *e*₀,*e*₁,*e*₂,*...*,*e*_{*E-*1} (or the symbol sequence *f*₀, *f*₁, *f*₂,*...*, *f*_{*E-*1}) may be equal or unequal.

For ease of differentiation, in this embodiment of this application, interleaving performed by the base station side on a symbol sequence (for example, interleaving the symbol sequence *e*₀,*e*₁,*e*₂,*...*,*e*_{*E-*1} into the symbol sequence *f*₀, *f*₁, *f*₂,*...*, *f*_{*E-*1}) is referred to as symbol-level interleaving, and de-interleaving performed by the terminal side on a symbol sequence (for example, interleaving the symbol sequence *f*₀, *f*₁, *f*₂,*...*, *f*_{*E-*1} into the symbol sequence *e*₀,*e*₁,*e*₂,*...*,*e*_{*E-*1}) is referred to as symbol-level de-interleaving. Symbol-level interleaving in this embodiment of this application may alternatively be replaced with interleaving, resource mapping, symbol-level cyclic interleaving, time domain symbol interleaving, or resource mapping, or may be referred to as symbol-wise interweaving. Symbol-level de-interleaving in this embodiment of this application may alternatively be replaced with de-interleaving, resource inverse mapping, symbol-level cyclic de-interleaving, time domain symbol de-interleaving, or resource inverse mapping, or may be referred to as symbol-wise de-interweaving.

Parameters (for example, N, M, and parameters related to the symbol sequence *e*₀,*e*₁,*e*₂,*...*,*e*_{*E-*1} and the symbol sequence *f*₀, *f*₁, *f*₂,*...*, *f*_{*E-*1}) in this embodiment of this application may satisfy the following content:

E=N*M, and N=a*M+k. N is 0 or a positive integer. M is 0 or a positive integer. a and k are positive integers. *e_{i*M+j} = f_{i+j*N}. f_{i+j*N}* is an (i+j*N)^{th} element in the symbol sequence *f*₀, *f*₁, *f*₂,*...*, *f*_{*E-*1}. is an (i*M+j)^{th} element in the symbol sequence *e*₀,*e*₁,*e*₂,*...*,*e*_{*E-*1}. A value range of j is [0, (M-1)]. A value range of i is [0, (N-1)], and j and i are positive integers.

For example, a value of N is 15, and a value of M is 14. The value range of j is [0, 13], and the value range of i is [0, 14]. The following provides several examples for ease of understanding.

Example 1: When a value of i is 0 and a value of j is 0, e₀=f₀, that is, e₀ (e₀ is a 0^{th} element in the symbol sequence *e*₀,*e*₁,*e*₂,*...*,*e*_{*E-*1}) in the symbol sequence *e*₀,*e*₁,*e*₂,*...*,*e*_{*E-*1} is mapped to f₀ (f₀ is a 0^{th} element in the symbol sequence *f*₀, *f*₁, *f*₂,*...*, *f*_{*E-*1}) in the symbol sequence *f*₀, *f*₁, *f*₂,*...*, *f*_{*E-*1}.

Example 2: When a value of i is 0 and a value of j is 1, e₁=f₁₅, that is, e₁ (e₁ is a first element in the symbol sequence *e*₀,*e*₁,*e*₂,*...*,*e*_{*E-*1}) in the symbol sequence *e*₀,*e*₁,*e*₂,*...*,*e*_{*E-*1} is mapped to f₁₅ (f₁₅ is a 15^{th} element in the symbol sequence *f*₀, *f*₁, *f*₂,*...*, *f*_{*E-*1}) in the symbol sequence *f*₀, *f*₁, *f*₂,*...*, *f*_{*E-*1}.

Example 3: When a value of i is 0 and a value of j is 2, e₂=f₃₀, that is, e₂ (e₂ is a second element in the symbol sequence *e*₀,*e*₁,*e*₂,*...*,*e*_{*E-*1}) in the symbol sequence *e*₀,*e*₁,*e*₂,*...*,*e*_{*E-*1} is mapped to f₃₀ (f₃₀ is a 30^{th} element in the symbol sequence *f*₀, *f*₁, *f*₂,*...*, *f*_{*E-*1}) in the symbol sequence *f*₀, *f*₁, *f*₂,*...*, *f*_{*E-*1}. The rest may be deduced by analogy, and details are not described again.

In this embodiment of this application, the parameters in the symbol sequence *e*₀,*e*₁,*e*₂,*...*,*e*_{*E-*1} and the symbol sequence *f*₀, *f*₁, *f*₂,*...*, *f*_{*E-*1} may alternatively meet another condition. For example, when the value range of j is [1, M] and the value range of i is [1, N], the symbol sequence *e*₀,*e*₁,*e*₂,*...*,*e*_{*E-*1} may be replaced with a symbol sequence *e*₁,*e*₂,*e*₃,*...*,*e_{E},* the symbol sequence *f*₀, *f*₁, *f*₂,*...*, *f*_{*E-*1} may be replaced with a symbol sequence *f*₁, *f*₂, *f*₃,*...*, *f_{E},* and *e_{i*M+j} = f_{i+j*N}* may be replaced with *e*_{(*i-*1)*}*_{M+j} = f*_{*i+*(*j-*1)}*_{*N}.* Herein, *f*_{*i+*(*j-*1)**N*} is an *(i +* (*j* - 1) * *N*)^{th} element in the symbol sequence *f*₁, *f*₂, *f*₃,*...*, *f_{E}*, and *e*_{(*i-*1)**M+j*} is an *((i -* 1) ** M + j*)^{th} element in the symbol sequence *e*₁,*e*₂,*e*₃,*...*,*e_{E}.* In this example, other parameters may not be changed. For a limitation condition of the other parameters, refer to the foregoing descriptions. Details are not described again.

In a possible implementation, k is 1. When a value of k is 1, reference signals may be more evenly distributed in the transport blocks (or symbol sequences carrying the transport blocks), so that decoding performance of the receive end can be further improved.

In this embodiment of this application, M is determined based on at least one of the following: a quantity of time domain symbols occupied by the first transport block, a quantity of time domain symbols included in a slot, a quantity of time domain symbols occupied by control information, or a quantity of time domain symbols occupied by a broadcast message. For example, if the quantity of time domain symbols occupied by the first transport block is 12, the value of M may be 12. For another example, if the quantity of time domain symbols included in the slot is 14, the value of M may be 14. For another example, if the quantity of time domain symbols occupied by the control information is 3, the value of M may be 3.

In the embodiment shown in FIG. 4, in another possible implementation, the base station may input the symbol sequence *e*₀,*e*₁,*e*₂,*...*,*e*_{*E-*1} into an interleaver, and content output by the interleaver is the symbol sequence *f*₀, *f*₁, *f*₂,*...*, *f*_{*E-*1}. The terminal may input the symbol sequence *f*₀, *f*₁, *f*₂,*...*, *f*_{*E-*1} into a de-interleaver, and content output by the de-interleaver is the symbol sequence *e*₀,*e*₁,*e*₂,*...*,*e*_{*E-*1}.

It may also be understood as that the base station obtains the symbol sequence corresponding to the first data, writes the symbol sequence corresponding to the first data into an M-row and N-column interleaver column by column at a granularity of a time domain symbol (which may be a granularity of one time domain symbol or a granularity of a plurality of time domain symbols), and reads the symbol sequence from the interleaver row by row. Both N and M are positive integers.

Correspondingly, after receiving the first data, the terminal may process the first data to obtain the symbol sequence corresponding to the first data, write the symbol sequence corresponding to the first data into an M-row and N-column de-interleaver row by row at a granularity of a time domain symbol (which may be a granularity of one time domain symbol or a granularity of a plurality of time domain symbols), and read the de-interleaver column by column to obtain the symbol sequence. For limitation conditions of N and M, refer to the foregoing descriptions. For example, N=a*M+k. Details about the parameters are not described again.

In a possible implementation, N may be greater than a quantity of time domain symbols included in one slot. In this way, data of a same transport block may be mapped to different time domain symbols in different slots. In addition, the receive end collects data that belongs to a same transport block together for decoding and the like. When one or more slots are affected by channel blocking in a data transmission process, only a part of data of one transport block is mapped to the slot. Therefore, the transport block is minimally affected by channel blocking, and a decoding success rate of the transport block is high.

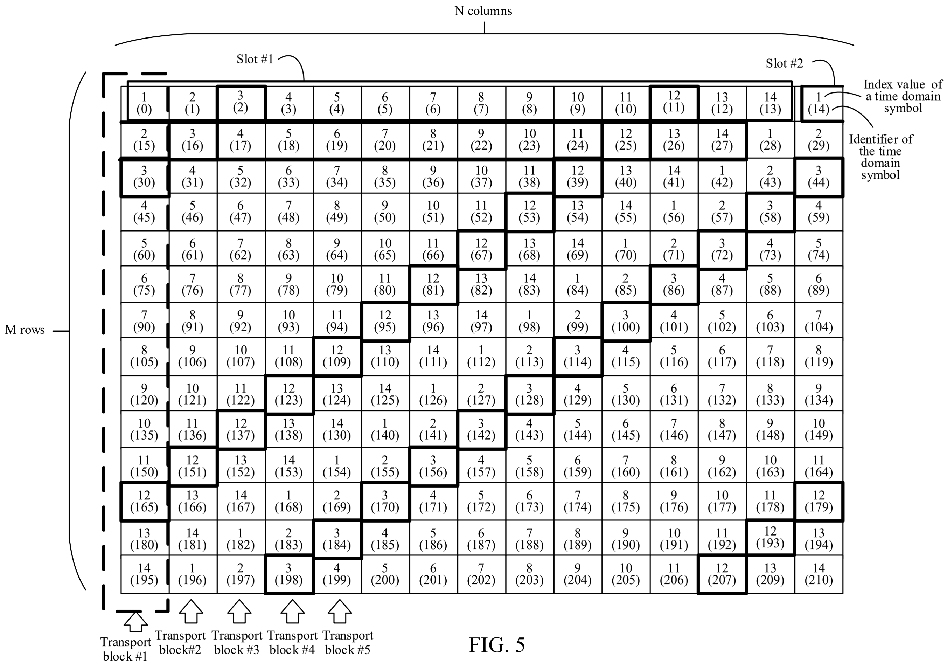

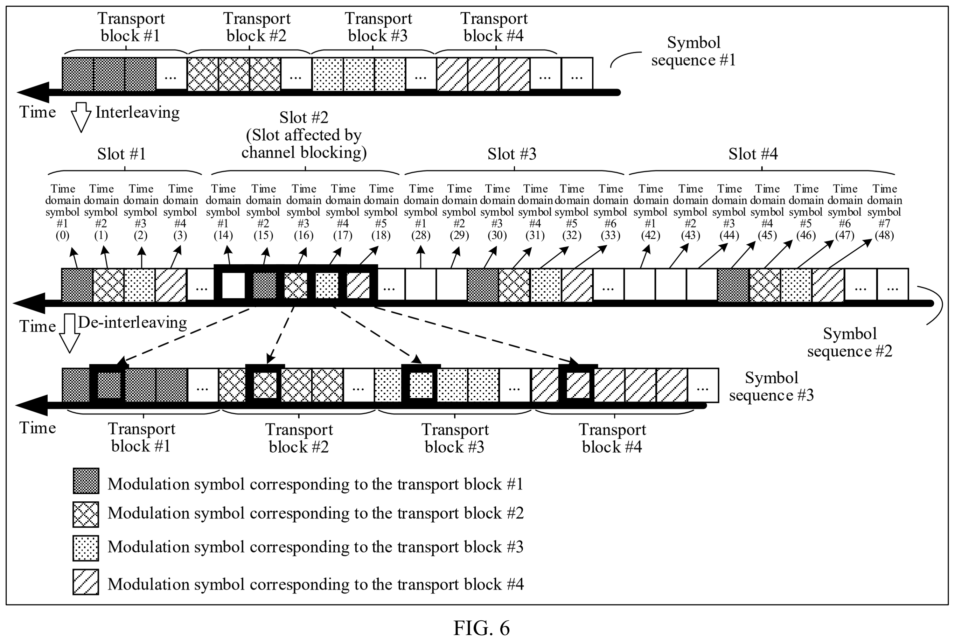

For ease of understanding, FIG. 5 and FIG. 6 are examples of diagrams of an interleaver according to an embodiment of this application. The interleaver includes M rows and N columns. N may also be referred to as an interleaving depth, and M may also be referred to as a storage length. For limitation conditions of N and M, refer to the foregoing descriptions. Details are not described again. In FIG. 5 and FIG. 6, an example in which one slot includes 14 time domain symbols is used for description. In this embodiment of this application, one slot may include another quantity of time domain symbols. Each square in FIG. 5 represents one time domain symbol in one slot.

In FIG. 5, there are two numbers in one square (one time domain symbol). A number outside a bracket may be understood as an index value of the time domain symbol in the slot, and a number inside the bracket may be understood as an identifier of the time domain symbol. For example, 1 in a first square in the upper left corner of the interleaver shown in FIG. 5 indicates that an index value of the time domain symbol is 1, and 0 in the square indicates that an identifier of the time domain symbol is 0. An index value of each time domain symbol may indicate a sequence of the time domain symbol in the slot. The identifier and the index value of the time domain symbol shown in FIG. 5 are merely a possible example. The identifier of the time domain symbol may alternatively start from 1, and the index value of the time domain symbol may alternatively start from 0.

Refer to FIG. 5. Data of each transport block may be mapped to one column of the interleaver. For example, in FIG. 5, data of a transport block #1 is mapped to a plurality of (a part of or all) time domain symbols in a 0^{th} column of the interleaver, data of a transport block #2 is mapped to a plurality of (a part of or all) time domain symbols in a first column of the interleaver, data of a transport block #3 is mapped to a plurality of (a part of or all) time domain symbols in a second column of the interleaver, and data of a transport block #4 is mapped to a plurality of (a part of or all) time domain symbols in a third column of the interleaver. For ease of understanding, in FIG. 5, time domain symbols in the first column are enclosed in a dashed box, so that a reader can understand that the data of the transport block #1 is mapped to the plurality of time domain symbols in the first column of the interleaver. For clarity of FIG. 5, no dashed box is added to columns other than the first column.

A process in which the base station writes the symbol sequence corresponding to the first data into the M-row and N-column interleaver column by column at the granularity of the time domain symbol may be in a plurality of forms. In a possible implementation, time domain symbols in each column of the interleaver may be distinguished based on types of mapped signals. For example, time domain symbols used to map reference signals (for example, a DMRS, a PTRS, a CSI-RS, an SRS, and a TRS) are assigned into a same type, time domain symbols used to map synchronization signals are assigned into a same type, time domain symbols used to map broadcast messages are assigned into a same type, and time domain symbols used to map data (data in a transport block) are assigned into a same type. A sorting order of time domain symbols of a same type may not conform to cyclic shifting. For example, time domain symbols whose index values are 3 to 14 in a column of the interleaver are used to carry data of transport blocks. When the data is mapped to the time domain symbols whose index values are 3 to 14, the data may not be mapped to the time domain symbols in an order of the index values of the time domain symbols, and may be mapped in another order. The following describes two possible implementations by using a manner 1 and a manner 2.

Manner 1: For a w^{th} column (or each column) of the interleaver, a value range of w is [0, (N-1)]. The base station writes a symbol sequence (for example, the symbol sequence corresponding to the first transport block) into the w^{th} column (or each column) in a top-to-bottom order of the w^{th} column at a granularity of a time domain symbol.

Correspondingly, in a de-interleaving process, for the w^{th} column (or each column) of the de-interleaver, the terminal reads the symbol sequence (for example, the symbol sequence corresponding to the first transport block) from the w^{th} column (or each column) in the top-to-bottom order of the w^{th} column (or each column) at the granularity of the time domain symbol. In this solution, the terminal may perform decoding based on a receiving order of the symbol sequence. Therefore, it is simple to implement.

For a structure form of the de-interleaver in this embodiment of this application, refer to the descriptions in FIG. 5. A difference lies in that the base station inputs a symbol sequence into the interleaver column by column, and reads a symbol sequence from the interleaver row by row, and the terminal inputs a symbol sequence into the interleaver row by row, and reads a symbol sequence from the interleaver column by column.

With reference to FIG. 5, an example of the manner 1 is provided. For example, for data corresponding to a transport block #5 (that is, a fourth column (a value of i is 4) of the interleaver), when the base station uses the manner 1, the base station may map a symbol sequence corresponding to the transport block #5 in the following order: a time domain symbol with an index value of 5, a time domain symbol with an index value of 6, a time domain symbol with an index value of 7, a time domain symbol with an index value of 8, a time domain symbol with an index value of 9, a time domain symbol with an index value of 10, a time domain symbol with an index value of 11, a time domain symbol with an index value of 12, a time domain symbol with an index value of 13, a time domain symbol with an index value of 14, a time domain symbol with an index value of 3, and a time domain symbol with an index value of 4.

Manner 2: For a w^{th} column (or each column) of the interleaver, a value range of w is [0, (N-1)]. The base station writes a symbol sequence (for example, the symbol sequence corresponding to the first transport block) into the w^{th} column (or each column) at a granularity of a time domain symbol in a sorting order of index values of time domain symbols corresponding to locations in the w^{th} column (or each column).

Correspondingly, in a de-interleaving process, for the w^{th} column (or each column) of the de-interleaver, the terminal reads the symbol sequence (for example, the symbol sequence corresponding to the first transport block) from the w^{th} column (or each column) at a granularity of a time domain symbol in the sorting order of the index values of the time domain symbols corresponding to the locations in the w^{th} column (or each column). It may also be understood as that the terminal side sorts the index values of the time domain symbols in the w^{th} column (or each column) of the de-interleaver, and then restores an original order in an inverse cyclic shift manner. In this solution, the terminal may perform decoding based on the order of the index values of the received time domain symbols, and logic is simple.

With reference to FIG. 5, an example of the manner 2 is provided. For example, for data corresponding to a transport block #5 (that is, a fourth column (a value of i is 4) of the interleaver), when the base station uses the manner 2, the base station may map a symbol sequence corresponding to the transport block #5 in the following order: a time domain symbol with an index value of 3, a time domain symbol with an index value of 4, a time domain symbol with an index value of 5, a time domain symbol with an index value of 6, a time domain symbol with an index value of 7, a time domain symbol with an index value of 8, a time domain symbol with an index value of 9, a time domain symbol with an index value of 10, a time domain symbol with an index value of 11, a time domain symbol with an index value of 12, a time domain symbol with an index value of 13, and a time domain symbol with an index value of 14.

Still refer to FIG. 5. The interleaver outputs content by row, and the interleaver may also be referred to as a row-in and row-out interleaver. As shown in FIG. 5, the base station sends, in a slot #1, 14 contiguous time domain symbols whose time domain symbol identifiers are 0 to 13 in the first row, and time domain symbols sent by the base station in a slot #2 include 14 consecutive time domain symbols whose time domain symbol identifiers are 14 to 27. Time domain symbols sent by the base station in a slot #3 include 14 contiguous time domain symbols whose identifiers of the time domain symbols are 28 to 41. Content sent in another slot is deduced by analogy, and details are not described again.

For example, with reference to FIG. 5 and the foregoing relationship between the symbol sequence *e*₀,*e*₁,*e*₂,*...*,*e*_{*E-*1} and the symbol sequence *f*₀, *f*₁, *f*₂,*...*, *f*_{*E-*1}, the value of N is 15, and the value of M is 14. The value range of j is [0, 13], and the value range of i is [0, 14]. When the value of i is 0 and the value of j is 0, e₀=f₀, and f₀ is a time domain symbol (or a modulation symbol or demodulation information mapped to the time domain symbol) identified as 0 in FIG. 5. When the value of i is 0 and the value of j is 1, e₁=f₁₅, and f₁₅ is a time domain symbol (or a modulation symbol or demodulation information mapped to the time domain symbol) identified as 15 in FIG. 5. When the value of i is 0 and the value of j is 2, e₂=f₃₀, and f₃₀ is a time domain symbol (or a modulation symbol or demodulation information mapped to the time domain symbol) identified as 30 in FIG. 5. The rest may be deduced by analogy, and details are not described again. It can be learned from FIG. 5 that the data in the transport blocks may be sequentially placed into the interleaver in sequence column by column, and when the data is read from the interleaver, time domain symbols may be sequentially read row by row.

In another possible implementation, reference signals may be mapped to several fixed time domain symbols in each slot. For example, a time domain symbol whose index value is 3 and a time domain symbol whose index value is 12 in each slot are used to map the reference signals. It can be learned from FIG. 5 that symbol sequences mapped to time domain symbols whose index values are 3 in slots are de-interleaved into different transport blocks (which may also be referred to as different columns of a de-interleaver, or symbol sequences corresponding to different transport blocks, or different symbol sequences carrying transport blocks); and symbol sequences mapped to time domain symbols whose index values are 12 in the slots are de-interleaved into different transport blocks (which may also be referred to as different columns of the de-interleaver, or symbol sequences corresponding to different transport blocks, or different symbol sequences carrying transport blocks). Because the reference signals may be discretized to different transport blocks instead of being centralized in one transport block, when the receive end performs decoding based on data of each transport block, a difference between encoding lengths of the transport blocks is small, an encoding gain is large, and decoding performance is improved.

The first transport block in this embodiment of this application may be one transport block. For example, the first transport block may include a transport block shown in FIG. 5, for example, the transport block #1, the transport block #2, the transport block #3, or the transport block #4. Alternatively, the first transport block may be a part of one transport block. For example, one transport block may be divided into two transport sub-blocks, and one transport sub-block is mapped to one column of the interleaver shown in FIG. 5. For example, the first transport block may also include a plurality of transport blocks (for example, the transport block #1 and the transport block #2) shown in FIG. 5. In a possible implementation, one column of the interleaver may be used to map symbol sequences corresponding to a plurality of transport blocks (or symbol sequences that carry the plurality of transport blocks). For example, data of a transport block #6 and data of a transport block #7 are mapped to a sixth column of the interleaver, and the first transport block may include the transport block #6 and/or the transport block #7.

As shown in FIG. 5, if quantities of modulation symbols corresponding to the transport blocks are not equal (lengths of symbol sequences corresponding to the transport blocks are not equal), for example, no data/signal is mapped to a part of columns in FIG. 5, the base station may use a quantity of time domain symbols in a column including a largest quantity of symbols as a standard, and automatically pad other short columns, for example, with 0s. In this way, decoding performance of the receive end can be improved.

FIG. 6 shows, from another perspective, an example in which symbol-level interleaving is performed on a symbol sequence in this embodiment of this application. FIG. 6 may be considered as a diagram from another perspective based on FIG. 5. As shown in FIG. 6, a base station obtains a symbol sequence #1, and interleaves the symbol sequence #1 to obtain a symbol sequence #2. A terminal receives the symbol sequence #2, and de-interleaves a symbol sequence *f*₀, *f*₁, *f*₂,*...*, *f*_{*E-*1} to obtain a symbol sequence #3. For a process in which a base station side interleaves the symbol sequence #1 to obtain the symbol sequence #2, refer to the foregoing related descriptions of interleaving the symbol sequence *e*₀,*e*₁,*e*₂,*...*,*e*_{*E-*1} into the symbol sequence *f*₀, *f*₁, *f*₂,*...*, *f*_{*E-*1}. The symbol sequence #1 may be considered as the symbol sequence *e*₀,*e*₁,*e*₂,*...*,*e*_{*E-*1}, and the symbol sequence #2 may be considered as the symbol sequence *f*₀, *f*₁, *f*₂,*...*, *f*_{*E-*1}. For a process in which a terminal side interleaves the symbol sequence #2 to obtain the symbol sequence #3, refer to the foregoing related descriptions of de-interleaving the symbol sequence *f*₀, *f*₁, *f*₂,*...*, *f*_{*E-*1} to obtain the symbol sequence *e*₀,*e*₁,*e*₂,*...*,*e*_{*E-*1}*.* The symbol sequence #2 may be considered as the symbol sequence *f*₀, *f*₁, *f*₂,*...*, *f*_{*E-*1}, and the symbol sequence #3 may be considered as the symbol sequence *e*₀,*e*₁,*e*₂,*...*,*e*_{*E-*1}*.*

FIG. 6 shows data of each transport block included in the symbol sequence #2. As shown in FIG. 6, each time domain symbol has two numbers. A number outside a bracket may be understood as an index value of the time domain symbol, and a number inside the bracket may be understood as an identifier of the time domain symbol. For example, a time domain symbol #1 in a slot #1 shown in FIG. 6 may be considered as an index value of the time domain symbol in the slot, and the time domain symbol may also be referred to as a time domain symbol whose identifier is 0.

Still refer to FIG. 6. Data in a transport block #1 is mapped to the time domain symbol #1 in the slot #1, a time domain symbol #2 in a slot #2, a time domain symbol #3 in a slot #3 (data of the transport block #1 may be mapped to the time domain symbol #3 in the slot #3, or a reference signal may be mapped to the time domain symbol #3 in the slot #3, and a parameter signal and the data of the transport block #1 may be mapped to different subcarriers of the time domain symbol #3), and a time domain symbol #4 in a slot #4. Similarly, data in a transport block #2 is mapped to a time domain symbol #2 in the slot #1, a time domain symbol #4 in the slot #3, and a time domain symbol #5 in the slot #4. Data in a transport block #3 is mapped to a time domain symbol #4 in the slot #2, a time domain symbol #5 in the slot #3, and a time domain symbol #6 in the slot #4. Data in a transport block #4 is mapped to a time domain symbol #4 in the slot #1, a time domain symbol #5 in the slot #2, a time domain symbol #6 in the slot #3, and a time domain symbol #7 in the slot #4. A time domain symbol whose index value is 3 in each slot may be mapped to data of a transport block, or may be mapped to a reference signal.

A transport block (for example, the transport block #1) may be mapped to another time domain symbol. This is not shown in FIG. 6. A slot in FIG. 6 may be mapped to a symbol sequence of another transport block (a transport block other than the transport block #1 to the transport block #4). This is not shown in FIG. 6. For example, the time domain symbol #1 in the slot #2 in FIG. 6 may be mapped to a symbol sequence of a transport block #15, the time domain symbol #1 in the slot #3 may be mapped to a symbol sequence of a transport block #14, and the time domain symbol #2 in the slot #3 may be mapped to a symbol sequence of the transport block #15.

After receiving the signal, the terminal obtains the symbol sequence #2 from the signal, and de-interleaves the symbol sequence #2 to obtain the symbol sequence #3. In a de-interleaving process, the terminal decodes symbol sequences corresponding to one transport block together. For example, the terminal decodes symbol sequences corresponding to the transport block #1 in symbol sequences together.

Still refer to FIG. 6. After each transport block is mapped to a time domain symbol of each slot at a granularity of a time domain symbol, a slot may be affected by channel blocking in a transmission process. For example, the slot #2 in FIG. 6 is affected by channel blocking. Because data transmitted in the slot #2 is distributed to transport blocks in the symbol sequence #3, an amount of data affected by channel blocking on each transport block is small. Therefore, when one transport block is decoded, a decoding success rate of the transport block is high. It can be learned that the solution can improve a decoding success rate of a transport block.

In another possible implementation, reference signals may be mapped to several fixed time domain symbols in each slot. For example, a time domain symbol #3 in each slot is used to map a reference signal. It can be learned from FIG. 6 that the reference signals mapped to time domain symbols #3 in slots are de-interleaved into different transport blocks. For example, a reference signal mapped to the time domain symbol #3 in the slot #1 in FIG. 6 is de-interleaved into the transport block #3, a reference signal mapped to the time domain symbol #3 in the slot #2 is de-interleaved into the transport block #2, and a reference signal mapped to the time domain symbol #3 in the slot #3 is de-interleaved into the transport block #1. Then, when the transmit end determines an encode block length based on a resource of each transport block, because the reference signals are discretized to transport blocks instead of being centralized in one transport block, encoding lengths of the transport blocks are similar or the same. This ensures that encoding gains of the transport blocks are similar or the same, and decoding performance is stable.

With reference to FIG. 5 and FIG. 6, an example is provided. It is assumed that time domain symbols whose index values range from 3 to 14 in the slot carry a PDSCH. Slot symbols whose index values are 3 and 12 in the slot carry demodulation reference signals (demodulation reference signal, DMRS) (density 1/2) and 12 RBs. A subcarrier spacing (subcarrier spacing, SCS) is 120 kilohertz. 16QAM modulation is used. If the reference signals are not distributed in transport blocks but are centralized in one transport block (that is, data of the transport block #1 is distributed on a time domain symbol whose index value is 1 in each slot, and data of the transport block #2 is distributed on a time domain symbol whose index value is 2 in each slot. As a result, time domain symbols whose index value are 3 and that are used to map reference signals are corresponding signals on a same transport block, that is, the reference signals are centralized in one transport block), a length of encoded bits corresponding to a transport block carrying a reference signal (for example, the DMRS) is 3456, and a length of encoded bits corresponding to a transport block not carrying the DMRS is 6912. It can be learned that a difference between the lengths of encoded bits corresponding to different transport blocks is large, and a difference between encoding gains is large.

In the solution provided in this embodiment of this application, the reference signals are discretized in transport blocks, and a length of encoded bits corresponding to each transport block is 6336. It can be learned that in this solution, lengths of all encode blocks are consistent, and performance is consistent and stable. Therefore, a problem of poor decoding performance and a decoding bottleneck of some encode blocks can be avoided.

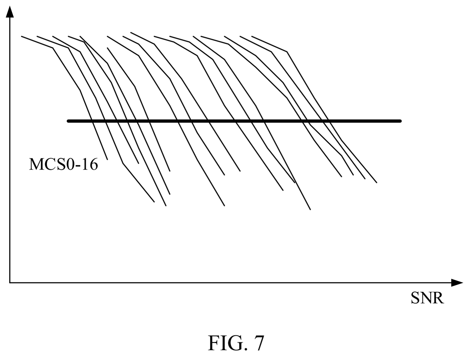

FIG. 7 is an example of a diagram of a simulation result according to an embodiment of this application. In FIG. 7, M=14, N=71, time domain symbols whose index values are 1 and 2 in each slot are used to carry physical downlink control channels (physical downlink control channel, PDCCH), and time domain symbols whose index values are 3 to 14 in each slot are used to carry physical downlink shared channels (physical downlink shared channel, PDSCH). Simulation is performed on the solution provided in this embodiment of this application. To be specific, the base station performs symbol-level interleaving on a sent symbol sequence, and the terminal side performs symbol-level de-interleaving on a received symbol sequence. As shown in FIG. 7, a horizontal axis in FIG. 7 represents a signal-to-noise ratio (signal noise ratio, SNR). The solution provided in this embodiment of this application can avoid an occurrence of an error floor. In the figure, MCS 0 to MCS 16 represent different modulation and coding schemes.

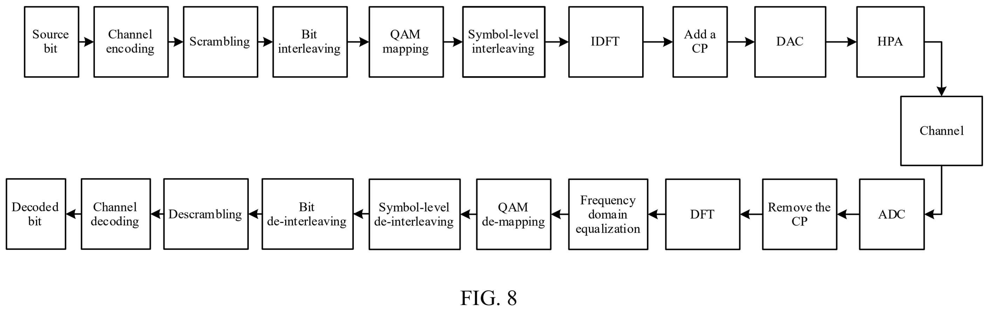

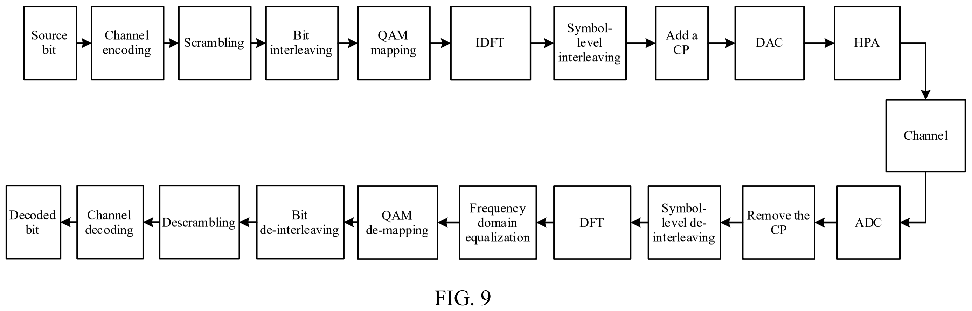

Based on the embodiment shown in FIG. 4, FIG. 8 and FIG. 9 are examples of diagrams of several communication solutions according to embodiments of this application. As shown in FIG. 8 and FIG. 9, an occasion on which the base station performs symbol-level interleaving processing may be flexibly set. For example, a step in which the base station performs symbol-level interleaving may be performed after QAM mapping, before inverse discrete Fourier transform (inverse discrete Fourier transform, IDFT), after IDFT, before adding a CP to data, or the like. An occasion on which the terminal performs symbol-level de-interleaving may be flexibly set. For example, a step in which the terminal performs symbol-level de-interleaving may be performed after QAM de-mapping, after discrete Fourier transform (discrete Fourier transform, DFT), before DFT, after removing a CP from data, or the like. The following describes, by using FIG. 8 and FIG. 9, two examples of locations of symbol-level interleaving and symbol-level de-interleaving in a communication procedure.

Refer to FIG. 8. As shown in FIG. 8, after adding a cyclic redundancy check (cyclic redundancy check, CRC) to source bits (source bits), the base station performs channel encoding (channel coding) on the source bits to obtain encoded bits. The base station scrambles (scrambling) the encoded bits, and performs bit interleaving (bit interweaving) on scrambled data. Bit interleaving is used to perform bit interleaving within a range of each encode block (in this embodiment of this application, a bit sequence obtained through channel encoding may be referred to as an encode block). The base station maps, through QAM, bits obtained through bit interleaving to a modulation symbol (the modulation symbol is, for example, a QAM symbol (symbol)). The base station performs symbol-level interleaving on the obtained QAM symbol, and performs IDFT on the interleaved QAM symbol, to transform the QAM symbol to time domain. The base station adds a CP to the QAM symbol on which the IDFT processing has been performed, performs digital to analog conversion (digital to analog converter, DAC) processing to obtain a continuous time signal, and then amplifies the time signal through a high power amplifier (high power amplifier, HPA) and transmits the time signal. Modules such as channel estimation in the system are omitted in FIG. 8.

Correspondingly, the signal reaches the terminal after passing through the ground or an NTN channel. The terminal samples the received continuous time signal, performs analog to digital conversion (analog to digital converter, ADC) processing on the signal obtained through sampling, then performs QAM de-mapping on the signal, and then obtains a discrete QAM symbol. The terminal removes the CP from the discrete QAM symbol, and performs DFT processing, to transform the QAM symbol to frequency domain. The terminal performs frequency equalization (frequency equalization) on the obtained QAM symbol, and then performs constellation inverse mapping (or demodulation) on the obtained QAM symbol, to obtain a demodulation soft value sequence. The terminal performs symbol-level de-interleaving on the obtained demodulation soft value sequence, and performs processing such as bit de-interleaving (bit de-interweaving), descrambling (descrambling), and channel decoding (channel decoding) on the obtained demodulation soft value sequence, to obtain decoded bits (decoded bits).

Content in FIG. 9 is similar to content in FIG. 8. A difference lies in that, in FIG. 9, the base station performs symbol-level interleaving after IDFT; and correspondingly, the terminal performs symbol-level de-interleaving before DFT. Other content is similar to that in FIG. 8, and details are not described again.

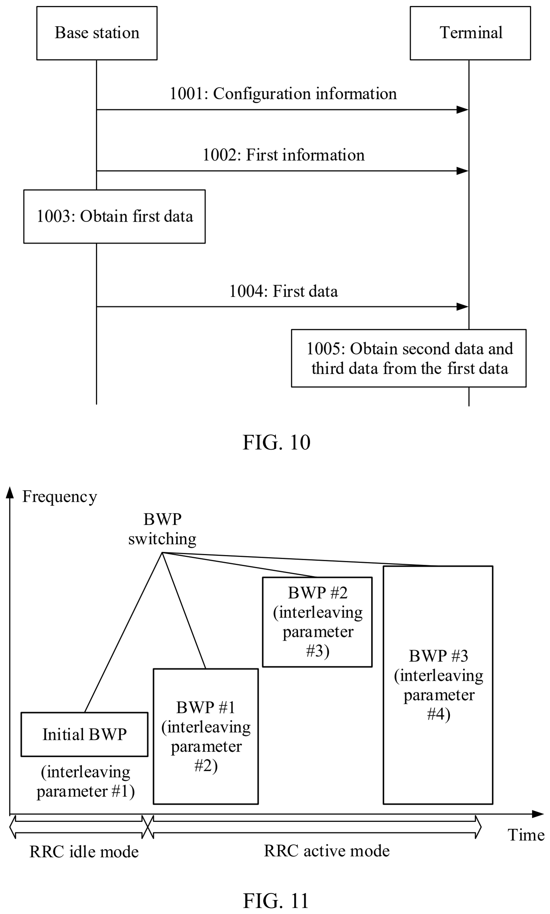

Based on the embodiments shown in FIG. 1, FIG. 2, FIG. 3, FIG. 4, FIG. 5, FIG. 6, FIG. 7, FIG. 8, and FIG. 9 and the foregoing other content, FIG. 10 is an example of a schematic flowchart of a communication method according to an embodiment of this application. For ease of understanding, FIG. 10 is described from a perspective of interaction between apparatuses. For related content of a first communication apparatus and a second communication apparatus in FIG. 10, refer to the descriptions in FIG. 4. Details are not described again. In this embodiment of this application, an example in which the first communication apparatus is a terminal and the second communication apparatus is a base station is used to describe the technical solutions provided in embodiments of this application. In embodiments of this application, the terminal may be replaced with the first communication apparatus, and the base station may be replaced with the second communication apparatus.

As shown in FIG. 10, the method includes the following steps.

Step 1001: The base station sends configuration information.

Correspondingly, the terminal receives the configuration information.

The configuration information may be used to configure a second parameter. The second parameter may be used to perform symbol-level interleaving processing on a symbol sequence, or may be used to perform symbol-level de-interleaving processing on a symbol sequence. In embodiments of this application, the base station may perform interleaving processing on the symbol sequence based on the second parameter, and then send the symbol sequence to the terminal. The terminal may perform de-interleaving on the symbol sequence based on the second parameter, to obtain information. In embodiments of this application, the terminal may perform interleaving processing on the symbol sequence based on the second parameter, and then send the symbol sequence to the base station; and the base station may perform de-interleaving on the symbol sequence based on the second parameter, to obtain information. Values of parameter items in the second parameter used by the base station to send data to the terminal may be the same as or different from values of parameter items in the second parameter used by the terminal to send data to the base station. This is not limited. In embodiments of this application, an example in which the base station sends an interleaved symbol sequence to the terminal is used for description. A solution in which the terminal sends an interleaved symbol sequence to the base station is similar to the solution, and details are not described again.

The second parameter may include at least one of a first parameter, resource information, polarization information, information that indicates whether to enable symbol-level interleaving processing on the symbol sequence, or information that indicates whether to enable symbol-level de-interleaving processing on the symbol sequence. The information that indicates whether to enable symbol-level interleaving processing on the symbol sequence may also be replaced with information that indicates to interleave a symbol sequence corresponding to to-be-sent data. The information that indicates whether to enable symbol-level de-interleaving processing on the symbol sequence may also be replaced with information that indicates to de-interleave a symbol sequence corresponding to received data.

The following describes content of the second parameter by using a parameter A1, a parameter A2, a parameter A3, a parameter A4, and a parameter A5.

### Parameter A1: first parameter.

The first parameter is used to perform symbol-level interleaving on the symbol sequence. The first parameter may also be used to de-interleave the symbol sequence.

The first parameter may include M and N. M and N may also be referred to as interleaving parameters. The interleaver is M rows and N columns, where a unit of each of M and M may be a time domain symbol, a slot, a subframe, a frame, a millisecond, or the like.

Parameter A2: resource information. The base station may configure resource information of data (for example, the first data) for the terminal. The resource information of the data may include time domain resource information and/or frequency domain resource information of the data (for example, the first data).

Parameter A3: polarization information. The base station may configure polarization information of data (for example, the first data) for the terminal. The polarization information of the data (for example, the first data) may indicate a polarization manner, and the polarization manner may include left-hand polarization or right-hand polarization.

The parameter A4 is used to indicate information about whether to perform interleaving on the symbol sequence corresponding to the to-be-sent data.

For ease of differentiation, in this embodiment of this application, interleaving the symbol sequence corresponding to the to-be-sent data may be referred to as symbol-level interleaving. In this way, the parameter A4 may also be replaced with information that indicates whether to enable symbol-level interleaving processing.

That the base station configures the parameter A4 for the terminal may also be understood as that the base station activates or deactivates symbol-level interleaving processing of the terminal. When the terminal determines that symbol-level interleaving processing needs to be enabled for the symbol sequence, the terminal enables symbol-level interleaving processing for a subsequent symbol sequence. When the terminal determines that symbol-level interleaving processing does not need to be enabled for the symbol sequence, the terminal does not enable symbol-level interleaving processing for the subsequent symbol sequence, or does not use the solution provided in this embodiment of this application in a process of performing interleaving processing on the symbol sequence (for example, the terminal maps data on a same transport block to time domain symbols with a same index value in different slots, for example, maps a symbol sequence of a transport block #1 to time domain symbols with an index value of 1 in slots).

The parameter A5 is used to indicate information about whether to perform de-interleaving on the symbol sequence corresponding to the received data.

For ease of differentiation, in this embodiment of this application, de-interleaving the symbol sequence corresponding to the received data may be referred to as symbol-level de-interleaving. In this way, the parameter A4 may also be replaced with information that indicates whether to enable symbol-level de-interleaving processing.

That the base station configures the parameter A5 for the terminal may also be understood as that the base station activates or deactivates symbol-level de-interleaving processing of the terminal. When the terminal determines that symbol-level de-interleaving processing needs to be enabled for the symbol sequence, the terminal enables symbol-level de-interleaving processing for a subsequent symbol sequence. When the terminal determines that symbol-level de-interleaving processing does not need to be enabled for the symbol sequence, the terminal does not enable symbol-level de-interleaving processing for the subsequent symbol sequence, or does not use the solution provided in this embodiment of this application in a process of performing interleaving processing on the symbol sequence.

In this embodiment of this application, information that indicates whether to enable symbol-level interleaving processing on the symbol sequence and information that indicates whether to enable symbol-level de-interleaving processing on the symbol sequence may be one piece of information, or may be two pieces of information. For example, when a bit value of one (or more) bit of the configuration information is 1, it indicates to enable symbol-level interleaving processing and symbol-level de-interleaving processing for the symbol sequence, and when the bit value of the one (or more) bit is 0, it indicates not to enable symbol-level interleaving processing and symbol-level de-interleaving processing for the symbol sequence. For another example, one piece of information in the configuration information indicates that symbol-level interleaving is enabled (or not enabled) for the symbol sequence, and another piece of information indicates that symbol-level de-interleaving processing is enabled (or not enabled) for the symbol sequence; or one piece of information in the configuration information indicates that symbol-level interleaving is not enabled (or enabled) for the symbol sequence, and another piece of information indicates that symbol-level de-interleaving processing is enabled (or not enabled) for the symbol sequence.

The base station may configure all or a part of the parameter A1, the parameter A2, the parameter A3, the parameter A4, or the parameter A5 for the terminal. In a possible implementation, the terminal may obtain a part of information. The part of information may be used to assist the base station in determining a parameter value configured by using the configuration information. The terminal may actively report the part of information to the base station, or the base station may indicate the terminal to report the part of information. The part of information may include, for example, at least one of location information, movement state information, surrounding environment information, or a channel parameter. For example, the terminal may obtain location information and/or movement state information of the terminal (for example, a movement direction and a speed of the terminal) by using a function of a global positioning system (global positioning system, GPS), a global satellite navigation system, or a global navigation satellite system (global navigation satellite system, GNSS) module. For another example, the terminal may obtain surrounding environment information and/or a channel parameter of the terminal by using a radar module, a video module, or a sensing module. The channel parameter may include at least one of a blocking degree, channel blocking, or blocking time length information. For another example, the terminal may obtain the channel parameter by performing channel estimation by using a reference signal (for example, a downlink reference signal).

In this embodiment of this application, the terminal and the base station may further update the second parameter. The base station may configure the updated second parameter for the terminal, or the terminal may determine the updated second parameter according to a protocol.

The following describes implementations of determining the second parameter by using several examples.

Implementation B1: The base station configures the second parameter for the terminal.

In the implementation B1, for example, the base station may configure a value of M and/or a value of N for the terminal by using signaling.

For example, the base station configures a value of M*N and the value of M, where the value of M*N may also be referred to as an interleaving length. The terminal may calculate the value of N based on the value of M*N and the value of M (for example, obtain the value of N based on a formula (M*N)/M). In this embodiment of this application, * may be understood as multiplication.

For another example, the base station configures a value of M*N and the value of N for the terminal. The terminal may calculate the value of M based on the value of M*N and the value of N (for example, obtain the value of M based on the formula (M*N)/N).

For another example, the base station configures the value of M and the value of N for the terminal. The terminal may calculate a value of M*N based on the value of M and the value of N.

For another example, the terminal and the base station may set the value of M (for example, set the value of M to 14) in a manner such as protocol agreement, negotiation in advance, or agreement. In this case, the base station does not need to configure the value of M for the terminal, and the base station may configure the value of N or the value of M*N for the terminal.

In the implementation B1, the base station may further configure other information in the second parameter for the terminal, for example, at least one of resource information of data, polarization information, information that indicates whether to enable symbol-level interleaving processing, or information that indicates whether to enable symbol-level de-interleaving processing.

Implementation B2: The base station and the terminal agree on an association relationship between a sequence number and the second parameter, and then the base station indicates the sequence number to the terminal, so that the terminal determines, based on the sequence number, the second parameter corresponding to the sequence number.

The terminal and the base station may agree on through a protocol or negotiate in advance, the association relationship between the sequence number and the second parameter. The association relationship may also be sent by the base station to the terminal through a system information block (system information block, SIB). The base station subsequently indicates the sequence number to the terminal through another message (for example, downlink control information (downlink control information, DCI) or medium access control control element (medium access control control element, MAC CE) signaling). The terminal searches the association relationship for the second parameter corresponding to the sequence number, and may subsequently use the found second parameter for symbol-level interleaving. According to this solution, signaling overheads can be reduced in a process in which the base station indicates the second parameter to the terminal.

The association relationship may be represented in a plurality of manners, for example, in a form of a table. The following uses Table 1 as an example to show the association relationship between the sequence number and the second parameter. A second row in Table 1 is used as an example for description. If the base station indicates a sequence number 1 to the terminal, the terminal may determine that the value of M is 14 and the value of N is 15. Content in other rows is similar to this, and details are not described again.

**Table 1 Example of an association relationship between a sequence number and a second parameter**

| Sequence number | Value of M | Value of N |
|---|---|---|
| 1 | 14 | 15 |
| 2 | 14 | 71 |
| 3 | 14 | 5601 |
| 4 | 14 | 7841 |

The following uses Table 2 as an example to show the association relationship between the sequence number and the second parameter. A second row and a fifth row in Table 2 are used as an example for description. If the base station indicates a sequence number 1 to the terminal, the terminal may determine that the terminal needs to perform interleaving processing on the symbol sequence by using the solution provided in this embodiment of this application, frequency domain resources corresponding to transmitted data are a resource block (resource block, RB) 0 to a resource block 20, and a polarization manner corresponding to the transmitted data is left-hand polarization. One RB may include 12 subcarriers or resource elements (resource element, RE). If the base station indicates a sequence number 4 to the terminal, the terminal may determine that the terminal does not enable symbol-level interleaving processing or symbol-level de-interleaving processing, frequency domain resources corresponding to transmitted data are an RB 0 to an RB 40, and a polarization manner corresponding to the transmitted data is right-hand polarization. Content in other rows is similar, and details are not described again. Table 2 is a possible example. In another implementation, whether to enable symbol-level interleaving (and/or de-interleaving) processing, resource information, and polarization information may alternatively be respectively indicated by using a plurality of tables (or association relationships).

**Table 2 Example of an association relationship between a sequence number and a second parameter**

| Sequence number | Whether to enable symbol-level interleaving processing | Whether to enable symbol-level de-interleaving processing | Frequency domain resource information | Polarization manner |
|---|---|---|---|---|
| 1 | Enable symbol-level interleaving processing | Enable symbol-level de-interleaving processing | RB 0 to RB 20 | Left-hand polarization |
| 2 | | | RB 0 to RB 30 | Right-hand polarization |
| 3 | | | RB 0 to RB 40 | Left-hand polarization |
| 4 | Not to enable symbol-level interleaving processing | Not to enable symbol-level de-interleaving processing | RB 0 to RB 40 | Right-hand polarization |
| 5 | | | RB 20 to RB 40 | Right-hand polarization |
| 6 | | | RB 30 to RB 40 | Left-hand polarization |

In another possible implementation, if the base station configures at least one of the value of M, the value of N, the resource information, or the polarization information for the terminal, it may be considered by default that the base station configures the terminal to enable symbol-level interleaving processing and enable symbol-level de-interleaving processing. This solution can reduce signaling overheads caused by activating a symbol-level interleaving mode of the terminal by the base station.

In another possible implementation, the base station may agree with the terminal on an association relationship between whether to enable symbol-level interleaving processing and at least one of the value of M, the value of N, the resource information, or the polarization information. For example, whether to enable symbol-level interleaving processing is associated with the polarization manner. For example, left-hand polarization corresponds to enabling symbol-level interleaving processing and enabling symbol-level de-interleaving processing, and right-hand polarization corresponds to disabling symbol-level interleaving processing and disabling symbol-level de-interleaving processing. When the terminal switches the polarization manner, whether to enable symbol-level interleaving (and/or de-interleaving) processing may be determined based on the polarization manner. This solution can reduce signaling overheads caused by activating/deactivating a symbol-level interleaving (and/or de-interleaving) mode of the terminal by the base station.

In an implementation B3, the base station and the terminal agree on an association relationship between a BWP and a second parameter, and then the terminal (or the base station) determines, based on a currently used BWP, a second parameter corresponding to the BWP.

The terminal and the base station may agree on through a protocol or negotiate in advance, the association relationship between the BWP and the second parameter. The association relationship may also be sent by the base station to the terminal through a system information block (system information block, SIB).

In a possible implementation, if signaling that is sent by the base station to the terminal and that is used to configure the BWP includes the second parameter, it may be considered by default that the base station configures the terminal to enable symbol-level interleaving processing and enable symbol-level de-interleaving processing. This solution can reduce signaling overheads caused by activating a symbol-level interleaving mode of the terminal by the base station.

The following uses a BWP information element in signaling sent by the base station for configuring the BWP as an example. As shown in the following content, the second parameter is added to original BWP signaling (for example, a value of M (M_value) and a value of N (N_value) are added), and information in an SWI_mode (SWI_mode) is used to indicate whether the terminal enables symbol-level interleaving (and/or de-interleaving) processing (or whether a symbol-level interleaving (and/or de-interleaving) mode of the terminal is activated).

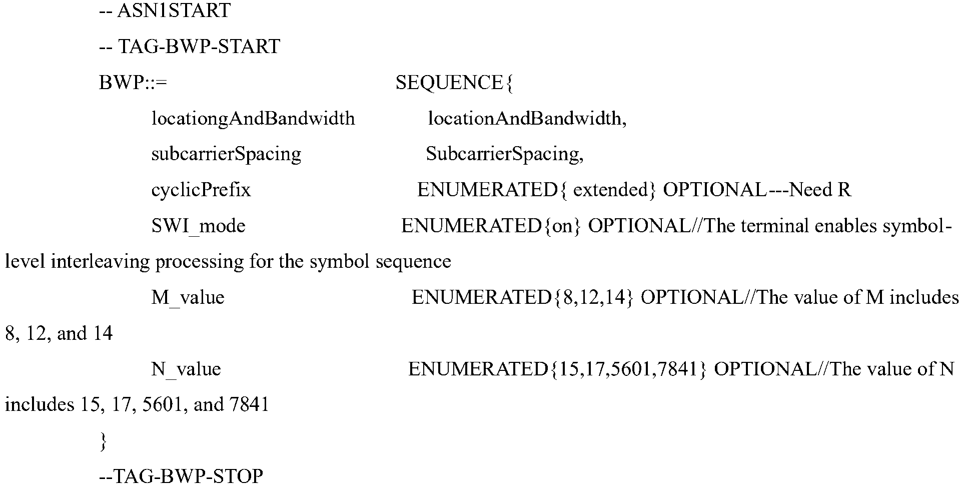

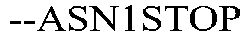

The foregoing content is a possible example of the BWP information element. In actual application, the BWP information element may be in another form.

One or more (for example, four) BWPs may be configured for each terminal. A BWP used by the terminal during initial access to the network may be different from a BWP used by the terminal after access. The terminal may switch the BWP. When switching the BWP, the terminal may interleave the symbol sequence by using a second parameter corresponding to the switched BWP. In this way, signaling overheads can be reduced during switching of the second parameter by the terminal. FIG. 11 is an example of a diagram of an association relationship between the BWP and the second parameter according to an embodiment of this application. As shown in FIG. 11, the terminal uses an initial BWP in RRC idle mode, and the initial BWP corresponds to a second parameter #1. The terminal may switch between a BWP #1, a BWP #2, and a BWP #3 in an RRC active mode (the BWP #1 may also be referred to as a first active BWP first active BWP). The BWP #1 corresponds to a second parameter #2, the BWP #2 corresponds to a second parameter #3, and the BWP #3 corresponds to a second parameter #4.

In a possible implementation, the initial BWP used by the terminal when the terminal initially accesses the network may be configured at a cell level. Therefore, the second parameter used by the terminal in this case may also be understood as a cell-level second parameter (for example, each cell is configured with a set of second parameters, and second parameters of two cells may be different).

In another possible implementation, the BWP used by the terminal after the terminal initially accesses the network may be configured at a terminal apparatus level, a beam level, or a cell level. Therefore, the second parameter used by the terminal in this case may alternatively correspondingly be a terminal apparatus-level second parameter (for example, each terminal is configured with a set of second parameters, and second parameters configured for two terminals may be different), a beam-level second parameter (for example, each beam is configured with a set of second parameters, and second parameters of two beams may be different), or a cell-level second parameter (for example, each cell is configured with a set of second parameters, and second parameters of two cells may be different).

In another possible implementation, it may be agreed that the terminal uses a default second parameter in some cases (for example, the default second parameter includes skipping symbol-level interleaving processing on the symbol sequence, or the default second parameter includes performing symbol-level interleaving processing on the symbol sequence). For example, it is agreed that the terminal uses the default second parameter (for example, the default second parameter includes skipping symbol-level interleaving processing on the symbol sequence, or the default second parameter includes performing symbol-level interleaving processing on the symbol sequence) in an initial access process, that is, when the initial BWP is used.

The association relationship between the BWP and the second parameter may be represented in a plurality of manners, for example, may be represented in a form of a table. The following uses Table 3 as an example to show an example of the association relationship between the BWP and the second parameter. The second row in Table 3 is used as an example for description. If an index value of a BWP used by the terminal is 0, the terminal may determine that the value of M is 14 and the value of N is 15. Content in other rows is similar to this, and details are not described again.

**Table 3 Example of an association relationship between a BWP and a second parameter**

| Index value of a BWP | Value of M | Value of N |
|---|---|---|
| 0 | 14 | 15 |
| 1 | 14 | 71 |
| 2 | 14 | 5601 |
| 3 | 14 | 7841 |

The following uses Table 4 as an example to show an association relationship between the BWP and the second parameter. A second row and a fourth row in Table 4 are used as examples for description. If an index value of the BWP used by the terminal is 0, the terminal may determine that symbol-level interleaving needs to be enabled and symbol-level de-interleaving processing needs to be enabled. In addition, a value of M is 14, and a value of N is 5601. If the index value of the BWP used by the terminal is 2, the terminal may determine not to enable symbol-level interleaving and not to enable symbol-level de-interleaving processing. Content in other rows is similar, and details are not described again.

**Table 4 Example of an association relationship between a BWP and a second parameter**

| Index value of a BWP | Whether to enable symbol-level interleaving processing | Whether to enable symbol-level de-interleaving processing | Value of M | Value of N |
|---|---|---|---|---|
| 0 | Enable symbol-level interleaving processing | Enable symbol-level de-interleaving processing | 14 | 5601 |
| 1 | | | 14 | 7841 |
| 2 | Not to enable symbol-level interleaving processing | Not to enable symbol-level de-interleaving processing | / | / |
| 3 | | | / | / |

In an implementation B4, if the base station does not configure a part of or all of the second parameters, a parameter that is not configured in the second parameters may use a default value. The default value may be agreed on by using a protocol, or may be configured by the base station for the terminal by using signaling.

Any combination of the foregoing implementations B1, B2, B3, and B4 in embodiments of this application may be used. For example, the base station may indicate, by using the signaling, the terminal to enable symbol-level interleaving (and/or de-interleaving) processing, and the terminal determines some or all of the remaining parameters (for example, the value of M or the value of N) in the second parameter based on the BWP.

The base station may further indicate an occasion on which the terminal enables symbol-level interleaving (and/or de-interleaving) processing. For example, the base station may indicate whether the terminal enables symbol-level interleaving (and/or de-interleaving) processing in an access process, or may indicate whether the terminal enables symbol-level interleaving (and/or de-interleaving) processing in a subsequent uplink data transmission process and/or downlink data transmission process after accessing a network. For example, if the configuration information is carried in system information, the terminal may perform symbol-level interleaving (and/or de-interleaving) by using the second parameter configured by using the configuration information in the access process, so that the terminal can resist impact caused by burst blocking in the access process.

The solutions provided in embodiments of this application are applicable to an entire process in which the terminal transits from an RRC idle mode (not accessing a network (or a system)) to an RRC connected mode (accessing the network (or the system)). Alternatively, the base station may separately configure parameters (the second parameters) used by the terminal to enable symbol-level interleaving processing for symbol sequences in an access process and after the access process. The parameters used by the terminal to enable symbol-level interleaving processing for symbol sequences in the access process and after the access process may be the same or different. For example, the base station may activate or deactivate a symbol-level interleaving mode of the terminal (for example, the base station activates or deactivates the symbol-level interleaving mode of the terminal in the access process of the terminal). When the base station activates the symbol-level interleaving mode of the terminal, the terminal may enable symbol-level interleaving processing for the symbol sequence. When the base station deactivates the symbol-level interleaving mode of the terminal, the terminal may determine not to enable symbol-level interleaving processing for the symbol sequence.

In this embodiment of this application, some communication apparatuses (for example, the terminal or the base station) may enable symbol-level interleaving (and/or de-interleaving), and some communication apparatuses (for example, the terminal or the base station) may not enable symbol-level interleaving (and/or de-interleaving). In this embodiment of this application, when the communication apparatus (for example, the terminal or the base station) does not enable symbol-level interleaving (and/or de-interleaving), the communication apparatus may not perform interleaving (and/or de-interleaving) on the symbol sequence; or the communication apparatus performs interleaving (and/or de-interleaving) on a symbol sequence, but a solution of performing interleaving (and/or de-interleaving) on the symbol sequence by the communication apparatus is different from symbol-level interleaving (and/or de-interleaving) in this embodiment of this application. For example, when the communication apparatus does not enable symbol-level interleaving (and/or de-interleaving), data on a same transport block is mapped to time domain symbols with a same index value in different slots. For example, the symbol sequence of the transport block #1 is mapped to time domain symbols whose index values are 1 in slots.

In a possible implementation, two types of communication apparatuses (for example, the terminals or the base station) (two types of communication apparatuses that enable symbol-level interleaving (and/or de-interleaving) and that do not enable symbol-level interleaving (and/or de-interleaving)) may transmit data in a frequency division multiplexing manner (different frequency domain resources may be configured for the two types of communication apparatuses), a time division multiplexing manner (different time domain resources may be configured for the two types of communication apparatuses), or a polarization multiplexing manner (different polarization information may be configured for the two types of communication apparatuses), to avoid interference between two types of transmission modes.

The configuration information may be carried in system information, an RRC message, a broadcast message, downlink control information, or media access control signaling. The system information in this embodiment of this application may include, for example, a system information block (system information block, SIB) 1, other system information (other system information, OSI), or a master information block (master information block, MIB). The configuration information in this embodiment of this application may be sent in a broadcast, unicast, or multicast manner. The broadcast or multicast manner may be used to avoid scheduling different resources for different terminals to send the configuration information, thereby reducing signaling overheads of scheduling resources and reducing system scheduling complexity. The downlink control information may include DCI or group DCI. The RRC message may include an RRC setup (RRC setup) message, RRC reconfiguration (RRC reconfiguration) signaling, RRC resume (RRC resume) signaling, or the like.

The configuration information in embodiments of this application may also be unicast or multicast to the terminal with data transmission or in a separately allocated PDSCH bearer. The advantage of unicasting or multicasting the configuration information to the terminal is that a parameter value of each terminal or each group of terminals can be flexibly controlled. Based on different probabilities of burst blocking and different blocking time lengths that are of different locations or different areas in which the terminal is located, different interleaving mode parameter values are configured for the terminal, to optimize a data transmission delay, a data buffer size, and communication performance of the terminal or system communication performance. For example, the base station may configure different second parameters (for example, interleaving depths) for different terminals or different groups of terminals based on different geographical locations of the terminals, different probabilities of burst blocking, and different blocking time lengths, to optimize data processing delay performance and buffer requirements of each terminal or each group of terminals, avoid unnecessary data processing delay and an excessively large buffer, and improve overall communication performance of the terminal and the system.

Step 1002: The base station sends first information.

Correspondingly, the terminal receives the first information.

The first information and the configuration information may be one piece of information, or may be two pieces of information. The configuration information and the first information may be carried in a same message, or may be carried in different messages. The first information is carried in system information, an RRC message, a broadcast message, downlink control information, or media access control signaling. For a carrying location of the first information and beneficial effect, refer to related descriptions of the configuration information. Details are not described again.

In this embodiment of this application, the first information indicates at least one of the following information:
start time for de-interleaving a symbol sequence corresponding to received data;
stop time for de-interleaving a symbol sequence corresponding to received data;
duration (or referred to as a time length or a timer length) for de-interleaving a symbol sequence corresponding to received data;
start time for interleaving a symbol sequence corresponding to to-be-sent data;
stop time for interleaving a symbol sequence corresponding to to-be-sent data; or
duration (or referred to as a time length or a timer length) for interleaving a symbol sequence corresponding to to-be-sent data.

The foregoing information may alternatively be configured by using a plurality of pieces of information. The plurality of pieces of information may be located in one message, or may be located in a plurality of messages. In this embodiment of this application, for ease of understanding, the information is collectively referred to as the first information. Alternatively, it may be understood that the base station may send the first information by using one message, or may send the first information by using a plurality of messages.

The indication of the start time for de-interleaving the symbol sequence corresponding to the received data may also be understood as start time for enabling symbol-level de-interleaving processing. The indication of the start time for interleaving the symbol sequence corresponding to the to-be-sent data may also be understood as start time for enabling symbol-level interleaving processing.

In a possible implementation, the first information may include two pieces of information, and the two pieces of information respectively indicate two pieces of start time. One piece of start time is start time for indicating to de-interleave the symbol sequence corresponding to the received data, and the other piece of start time is start time for indicating to interleave the symbol sequence corresponding to the to-be-sent data. Alternatively, the first information may include one piece of information, and the one piece of information indicates one piece of start time. The start time may be considered as start time for de-interleaving the symbol sequence corresponding to the received data, and may also be considered as start time for interleaving the symbol sequence corresponding to the to-be-sent data. A solution in which the first information is used to configure the stop time for interleaving (and/or de-interleaving) the symbol sequence is similar to the foregoing solution. For example, the two pieces of stop time may be indicated by one piece of information or two pieces of information. A related solution is similar to the foregoing solution, and details are not described again. A solution in which the first information is used to configure processing duration for interleaving (and/or de-interleaving) the symbol sequence is similar to the foregoing solution. For example, the two pieces of duration may be indicated by one piece of information or two pieces of information. A related solution is similar to the foregoing solution, and details are not described again.

In a possible implementation, the base station may configure information indicating time, such as a frame number, a subframe number, a slot number, or an index value (or an identifier) of a time domain symbol, for the terminal, or the base station may configure information indicating time, such as an hour, a minute, and a second, for the terminal. The time indicated by the information may be considered by the terminal as start time for enabling symbol-level interleaving (and/or de-interleaving) processing. Similarly, the base station may configure information that indicates stop time for stopping performing symbol-level interleaving (and/or de-interleaving) processing as information indicating time.

In another possible implementation, the base station sends signaling (for example, signaling used to indicate the terminal to enable symbol-level interleaving (and/or de-interleaving) processing, or signaling sent by the base station to the terminal and used to indicate a parameter (for example, the second parameter) used for enabling symbol-level interleaving (and/or de-interleaving) processing) to the terminal. Receiving time of the signaling or a frame/subframe/slot number of the signaling is used as a start point, and time at which duration t₀ (t₀ is 0 or a positive integer) is away from the start point may be considered as start time at which symbol-level interleaving (and/or de-interleaving) processing is enabled by the terminal. For example, if t₀ is 0, the terminal considers a same (or next) slot (time domain symbol, subframe, or frame) after receiving the signaling as the start time for enabling symbol-level interleaving (and/or de-interleaving) processing. For another example, if t₀ is 1 and a time unit is agreed to be a slot (the time unit may alternatively be a symbol, a subframe, a frame, or another time unit), the terminal receives the signaling in a slot #n, and the terminal considers a slot # (n+t₀) as the start time for enabling symbol-level interleaving (and/or de-interleaving) processing. Similarly, the terminal may also determine, by using a similar solution, stop time for indicating to stop using symbol-level interleaving (and/or de-interleaving) processing. A related solution is similar to the foregoing solution, and details are not described again.

In this embodiment of this application, duration of enabling symbol-level interleaving (and/or de-interleaving) processing that is configured by the base station may be configured as time information that indicates a period of time, for example, information such as a frame number, a subframe number, a slot number, an index value (or an identifier) of a time domain symbol, an hour, a minute, or a second included in the period of time.

In a possible implementation, when the base station configures the start time and the duration of enabling symbol-level interleaving (and/or de-interleaving) processing for the terminal, the base station may not configure the stop time for stopping symbol-level interleaving (and/or de-interleaving) processing. In other words, after determining that the duration of enabling symbol-level interleaving (and/or de-interleaving) processing meets the duration, the terminal automatically stops symbol-level interleaving (and/or de-interleaving) processing. In another possible implementation, when the base station configures the start time and the stop time of enabling symbol-level interleaving (and/or de-interleaving) processing for the terminal, the base station may not configure the duration of stopping symbol-level interleaving (and/or de-interleaving) processing. In other words, the terminal automatically stops symbol-level interleaving (and/or de-interleaving) processing at the stop time of symbol-level interleaving (and/or de-interleaving) processing.

In this embodiment of this application, after determining the start time of enabling symbol-level interleaving (and/or de-interleaving) processing, the terminal enables symbol-level interleaving (and/or de-interleaving) processing for the symbol sequence after the time. Symbol-level interleaving (and/or de-interleaving) processing may not be enabled before the start time, or symbol-level interleaving (and/or de-interleaving) processing is enabled, but symbol-level interleaving (and/or de-interleaving) processing is stopped before the start time.

In another possible implementation, at least one of the start time of enabling symbol-level interleaving (and/or de-interleaving) processing, the time of stopping symbol-level interleaving (and/or de-interleaving) processing, or the duration of symbol-level interleaving (and/or de-interleaving) processing may be agreed on (or negotiated) by the base station and the terminal, or may be configured by the base station.

In another possible implementation, signaling of the start time of enabling symbol-level interleaving (and/or de-interleaving) processing that is configured by the base station may also be understood as signaling used to activate symbol-level interleaving (and/or de-interleaving) processing for the terminal. In another possible implementation, signaling of the time (or referred to as a stop time) of stopping performing symbol-level interleaving (and/or de-interleaving) processing that is configured by the base station may also be understood as signaling used to deactivate symbol-level interleaving (and/or de-interleaving) processing for the terminal.

Step 1003: The base station obtains the first data.

For details about step 1003, refer to the content of step 401. Details are not described again.

Step 1004: The base station sends the first data.

Correspondingly, a terminal receives the first data.

For details about step 1004, refer to the content of step 402. Details are not described again.

Step 1005: The terminal obtains the second data and the third data from the first data.

For details about step 1005, refer to the content of step 403. Details are not described again.

According to the solution provided in FIG. 10, the base station may configure the second parameter for the terminal. In another aspect, in the solution provided in FIG. 10, the base station may also configure the second parameter for the terminal in a manner that saves signaling overheads. In another aspect, the terminal may further update the second parameter, so that the second parameter used by the terminal can be more accurate, and decoding performance can be further improved.

In the embodiments provided in FIG. 4 and FIG. 10, the base station may further perform subcarrier interleaving on the symbol sequence. Correspondingly, the terminal may perform subcarrier de-interleaving on a received symbol sequence. In this embodiment of this application, the terminal may alternatively send data to the base station. In this case, the terminal may perform subcarrier interleaving on a to-be-sent symbol sequence, and the base station may perform subcarrier de-interleaving on the received symbol sequence. In this embodiment of this application, an example in which the base station sends the data to the terminal is used. An example in which the terminal sends the data to the base station is similar to the example, and details are not described again.

Subcarrier interleaving in this embodiment of this application may be replaced with another name, for example, replaced with subcarrier mapping, interleaving, or mapping. Subcarrier de-interleaving in this embodiment of this application may be replaced with another name, for example, replaced with subcarrier demapping, de-interleaving, demapping, inverse mapping, or subcarrier inverse mapping.

In this embodiment of this application, subcarrier interleaving may be performed before or after symbol-level interleaving. For example, the base station may perform symbol-level interleaving on the symbol sequence and then perform subcarrier interleaving, or the base station may perform subcarrier interleaving on the symbol sequence and then perform symbol-level interleaving on the symbol sequence. In this embodiment of this application, another data processing step may be included between symbol-level interleaving and subcarrier interleaving, or no another data processing step may be included.

Similarly, in this embodiment of this application, subcarrier de-interleaving may be performed before or after symbol-level de-interleaving. For example, the terminal may perform symbol-level de-interleaving on the symbol sequence and then perform subcarrier de-interleaving, or the terminal may perform subcarrier de-interleaving on the symbol sequence and then perform symbol-level de-interleaving on the symbol sequence. In this embodiment of this application, another data processing step may be included between symbol-level de-interleaving and subcarrier de-interleaving, or no another data processing step may be included.

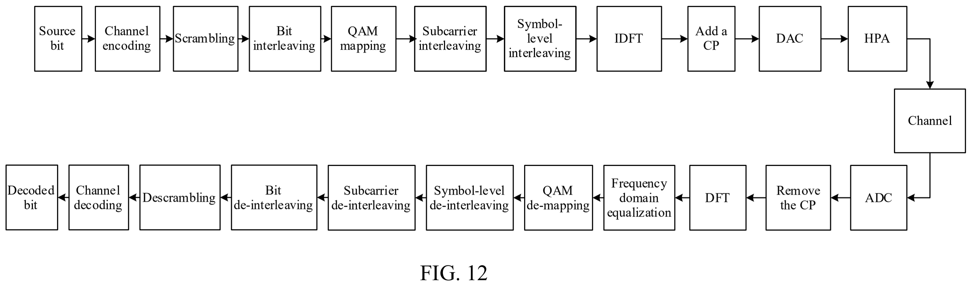

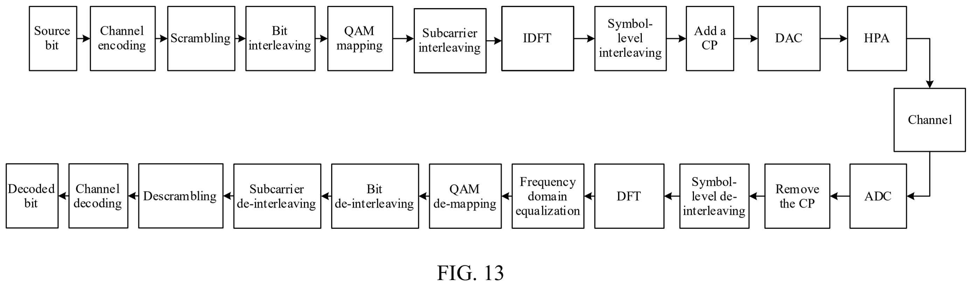

FIG. 12 and FIG. 13 each show an example of a schematic flowchart of several communication solutions according to an embodiment of this application. FIG. 12 may be considered as a possible implementation of FIG. 8. In comparison with FIG. 8, in FIG. 12, the base station may add a module used for subcarrier interleaving after QAM mapping and before symbol-level interleaving, and the terminal may add a module used for subcarrier de-interleaving after symbol-level de-interleaving (before bit de-interleaving). FIG. 13 may be considered as a possible implementation of FIG. 9. In comparison with FIG. 9, in FIG. 13, the base station may add a module used for subcarrier interleaving after QAM mapping and before IDFT, and the terminal may add a module used for subcarrier de-interleaving after QAM demapping (before bit de-interleaving). For other content of FIG. 12 and FIG. 13, refer to the descriptions of FIG. 8 and FIG. 9. Details are not described again.

Symbol-level interleaving and subcarrier interleaving in embodiments of this application may be used separately, or may be used in combination, to improve decoding performance. In a possible implementation, the base station may indicate whether to enable subcarrier interleaving for the terminal. The base station may indicate, by using the configuration information, whether to enable subcarrier interleaving for the terminal. For example, the terminal may obtain the configuration information before step 1004. For related content (for example, a bearing location and beneficial effect) of the configuration information, refer to related descriptions of the configuration information in step 1001. Details are not described again. For a solution in which the base station configures whether to enable subcarrier interleaving for the terminal, refer to content in the embodiment in FIG. 10. Details are not described again. There are a plurality of indication manners of the base station. The following lists several possible examples.

Example 1: If the base station does not activate subcarrier interleaving (and/or de-interleaving), the terminal uses symbol-level interleaving (and/or de-interleaving) by default. If the base station indicates to activate subcarrier interleaving (and/or de-interleaving), the terminal enables subcarrier interleaving (and/or de-interleaving) and symbol-level interleaving (and/or de-interleaving) by default.

Example 2: The terminal and the base station may agree on through a protocol or negotiate in advance, an association relationship between the interleaving mode and the sequence number. The association relationship may also be sent by the base station to the terminal through a system information block (system information block, SIB). The interleaving mode may include information about whether to enable symbol-level interleaving (and/or de-interleaving) and information about whether to enable subcarrier interleaving (and/or de-interleaving).

Subsequently, the base station indicates a sequence number to the terminal by using another message (for example, DCI or MAC CE signaling), and the terminal searches the association relationship for an interleaving mode corresponding to the sequence number. According to this solution, signaling overheads can be reduced in a process in which the base station indicates the interleaving mode to the terminal. The association relationship may be a table or in another form. Table 5 shows an example of the association relationship between the sequence number and the interleaving mode. The second row and the third row in Table 5 are used as an example. If the terminal indicates that the sequence number is 0, the terminal determines, based on Table 5, not to enable symbol-level interleaving processing, not to enable subcarrier interleaving processing, not to enable symbol-level de-interleaving processing, and not to enable subcarrier de-interleaving processing. If the terminal indicates that the sequence number is 1, the terminal determines, based on Table 5, to enable symbol-level interleaving processing, not to enable subcarrier interleaving processing, to enable symbol-level de-interleaving processing, and not to enable subcarrier de-interleaving processing. A subcarrier interleaving processing solution #1 and a subcarrier interleaving processing solution #2 shown in Table 5 are two subcarrier interleaving processing solutions provided in this embodiment of this application. The subcarrier interleaving processing solution #1 may also be referred to as horizontal and vertical interleaving, and the subcarrier interleaving processing solution #2 may also be referred to as oblique cyclic interleaving. A subcarrier de-interleaving processing solution #3 may be understood as reverse processing of the subcarrier interleaving processing solution #1, and a subcarrier de-interleaving processing solution #4 may be understood as reverse processing of the subcarrier interleaving processing solution #2. These solutions are described in detail subsequently, and are not described herein. Table 5 is a possible example. An actual association relationship between the sequence number and the interleaving mode may also include one or more rows in Table 5.

**Table 5 Example of an association relationship between a sequence number and an interleaving mode**

| Sequence number | Interleaving mode | |
|---|---|---|
| 0 | Not to enable symbol-level interleaving processing and subcarrier interleaving processing (also referred to as the non-interleaving mode) | Not to enable symbol-level de-interleaving processing and subcarrier de-interleaving processing |
| 1 | Enable symbol-level interleaving processing, and not to enable subcarrier interleaving processing | Enable symbol-level de-interleaving processing, and not to enable subcarrier de-interleaving processing |
| 2 | Enable symbol-level interleaving processing and subcarrier interleaving processing (subcarrier interleaving processing solution #1) | Enable symbol-level de-interleaving processing and subcarrier de-interleaving processing (subcarrier de-interleaving solution #3) |
| 3 | Enable symbol-level interleaving processing and subcarrier interleaving processing (subcarrier interleaving solution #2) | Enable symbol-level de-interleaving processing and subcarrier de-interleaving processing (subcarrier de-interleaving solution #4) |

In an example 3, whether to enable symbol-level interleaving (and/or de-interleaving) and whether to enable subcarrier interleaving (and/or de-interleaving) are determined based on a proportion of a time domain resource scheduled by the base station to the terminal in an entire interleaving block resource.

For example, when the time domain resource scheduled to the terminal spreads across the entire interleaving block resource (where an interleaving block in this embodiment of this application may be understood as a matrix corresponding to an interleaver, for example, data of M rows and N columns of the interleaver shown in FIG. 5 may be considered as one interleaving block, and the interleaving block resource is the foregoing M*N time domain symbols) or the time domain resource scheduled to the terminal occupies a specific proportion (for example, more than 80%) of the interleaving block resource, symbol-level interleaving (and/or de-interleaving) and subcarrier interleaving (and/or de-interleaving) are automatically enabled. Otherwise, symbol-level interleaving (and/or de-interleaving) is enabled, and subcarrier interleaving (and/or de-interleaving) is not enabled (or symbol-level interleaving (and/or de-interleaving) is not used).

There are a plurality of subcarrier interleaving solutions in this embodiment of this application. The following describes two subcarrier interleaving solutions by using an implementation C1 and an implementation C2 as examples. A subcarrier interleaving solution described in the implementation C1 is the subcarrier interleaving solution #1 (horizontal and vertical interleaving), and a subcarrier interleaving solution described in the implementation C2 is the subcarrier interleaving solution #2 (oblique cyclic interleaving). The subcarrier de-interleaving solution #3 may be considered as reverse processing of the subcarrier interleaving solution #1, and content of a mapping rule between a modulation symbol and a subcarrier is similar. Details are not described again. The subcarrier de-interleaving solution #4 may be considered as reverse processing of the subcarrier interleaving solution #2, and content of a mapping rule between a modulation symbol and a subcarrier is similar. Details are not described again.

For ease of understanding, in the implementation C1 and the implementation C2, an example in which the base station first performs symbol-level interleaving processing on the symbol sequence and then performs subcarrier interleaving processing is used for description. Correspondingly, the terminal may first perform subcarrier de-interleaving on the symbol sequence, and then perform symbol-level de-interleaving processing.

Implementation C1: The subcarrier interleaving solution is the subcarrier interleaving solution #1 (horizontal and vertical interleaving).

In the Implementation C1, when performing subcarrier interleaving on the symbol sequence, the base station may perform subcarrier interleaving, in a time domain first and frequency domain second order, on modulation symbols carried by a first row of time domain symbols of an interleaving block in FIG. 5 (in this embodiment of this application, the interleaving block is a matrix corresponding to an interleaver, for example, content (at least one of data, information, or a reference signal) mapped to M*N time domain resources of an M-row and N-column interleaver). Correspondingly, the terminal may perform subcarrier de-interleaving on demodulated modulation symbols based on a subcarrier interleaving order, that is, extract the demodulated modulation symbols in the time domain first and frequency domain second order, and then restore an original symbol sequence in a frequency domain first and time domain second order.

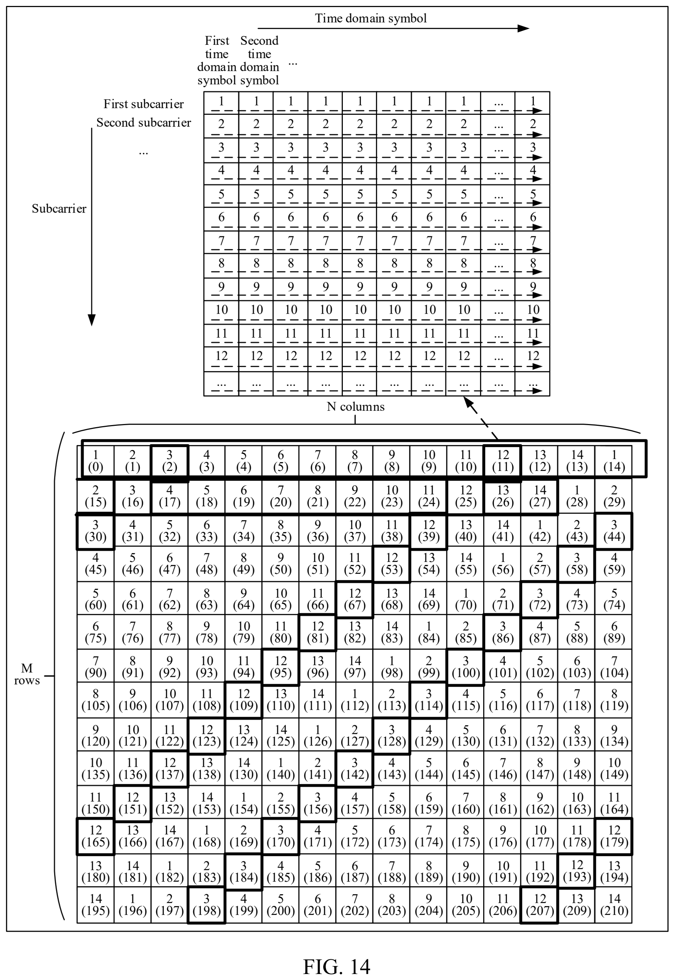

FIG. 14 is an example of a diagram of an interleaver according to an embodiment of this application. In the solution shown in FIG. 14, subcarrier interleaving is added on a basis of symbol-level interleaving. A lower part of the figure shows a diagram of symbol-level interleaving (which is consistent with content in FIG. 5), and an upper part of the figure shows a diagram of further expansion of frequency domain resources in a row (for example, a first row) of time domain symbols in a symbol-level interleaving block. In the diagram in the upper part of the figure, one column indicates subcarrier resources of one time domain symbol (for example, an OFDM symbol), and resources in one row are subcarrier resources of different time domain symbols.

As shown in FIG. 14, when performing subcarrier interleaving on a modulation symbol sequence carried by a first row of time domain symbols of an interleaved block (data in M rows and N columns in an interleaver shown in the lower part of FIG. 14), the base station first maps the symbol sequence to a first subcarrier resource of each time domain symbol in a first row shown in the upper part of FIG. 14. After the subcarrier resource of the first row is mapped, the base station maps the subcarrier resource of a second row (that is, a second subcarrier resource of each time domain symbol).

As shown in FIG. 14, for example, a modulation symbol sequence carried by the first row of time domain symbols in the interleaved block (the M rows and N columns of data in the interleaver shown below FIG. 14) is extracted based on an original mapping order to form a symbol sequence (where an element in the symbol sequence may include one modulation symbol or demodulation information of one modulation symbol, and the symbol sequence may also be referred to as a modulation symbol sequence or a modulation symbol demodulation information sequence). The symbol sequence is mapped in a time domain first order. To be specific, a first element (for example, a first modulation symbol in the symbol sequence) in the symbol sequence is first mapped (or referred to as placed) to a first subcarrier of the first time domain symbol, a second element (for example, a second modulation symbol) in the symbol sequence is mapped to a first subcarrier of a second symbol, a third element (for example, a third modulation symbol) in the symbol sequence is mapped to a first subcarrier of a third symbol, and the like, until first subcarriers of all the time domain symbols are mapped. Then, the base station sequentially maps elements in the symbol sequence to a second subcarrier of the first symbol, a second subcarrier of the second symbol, and the like. In an order indicated by an upper line with an arrow in FIG. 14, data is first mapped in a row first (that is, time domain resource-first) manner, and then mapped in a frequency domain resource of a lower priority. A resource mapping order is presented in a horizontal and vertical order. Therefore, the subcarrier interleaving solution provided in the implementation C1 may also be referred to as horizontal and vertical interleaving.

In this embodiment of this application, an example is described by using an RE as a unit. The unit may alternatively be replaced with an RE group or a subcarrier group. For example, subcarrier interleaving is performed by using an RB (a group of 12 subcarriers) as a unit. A box in an upper part in FIG. 14 may represent one RB.

In this embodiment of this application, the subcarrier may be an available data subcarrier, and a subcarrier used to map a reference signal, a synchronization signal, or the like may be excluded. A sequence number range and a start value in FIG. 14 are examples, and are not limited.

The following provides an example. It is assumed that M is 14 and N is 71. It is assumed that time domain symbols whose index values range from 3 to 14 in the slot carry a PDSCH, time domain symbols whose index values are 3 and 12 in the slot carry a DMRS (density 1/2), and an SCS is 120 kHz. As shown in FIG. 14, data on time domain symbols whose index values are 7, 8, and 9 in a slot #1 is affected by burst blocking. If the base station enables symbol-level interleaving but does not enable subcarrier interleaving, when the terminal performs decoding, three PDSCH transport blocks are affected by burst blocking, and 1584 subcarriers in each PDSCH transport block are affected. If the base station enables symbol-level interleaving and subcarrier interleaving, when the terminal performs decoding, 60 PDSCH transport blocks are affected by burst blocking, and about 80 subcarriers in each PDSCH transport block are affected. It can be learned that when the base station enables symbol-level interleaving and subcarrier interleaving, impact of burst blocking on different transport blocks can be further equalized. In addition, it can be found through simulation that when the base station enables symbol-level interleaving and subcarrier interleaving, a frequency domain diversity gain can be brought, decoding performance can be further improved, and a slope of a block error rate (block error rate, BLER) curve can be further improved.

In another implementation, in a process of performing carrier interleaving, the base station may extract content carried in N elements in a symbol sequence corresponding to the first data in order, to form a symbol sequence *h*₀,*h*₁,*h*₂,*...*,*h*_{F*-*1}. An element in the symbol sequence *h*₀,*h*₁,*h*₂,*...*,*h*_{F*-*1} may be referred to as a modulation symbol, and the symbol sequence *h*₀,*h*₁,*h*₂,*...*,*h*_{F*-*1} may also be referred to as a modulation symbol sequence *h*₀,*h*₁,*h*₂,*...*,*h*_{F*-*1}*.* The N elements in the symbol sequence corresponding to the first data include N time domain symbols in the symbol sequence corresponding to the first data, or at least one modulation symbol mapped to the N time domain symbols, or demodulation information (for example, soft value information of a decoded bit) of at least one modulation symbol mapped to the N time domain symbols.

The base station may perform subcarrier interleaving on the modulation symbol sequence *h*₀,*h*₁,*h*₂,*...*,*h*_{F*-*1} to obtain the symbol sequence g₀,g₁,g₂,...,g_{F-1}. Correspondingly, in a process of performing subcarrier de-interleaving, the terminal may de-interleave the symbol sequence g₀,g₁,g₂,...,g_{F-1} into the symbol sequence *h*₀,*h*₁,*h*₂,*...*,*h*_{F*-*1}. An element in the symbol sequence g₀,g₁,g₂,...,g_{F-1} may be referred to as a modulation symbol, and the symbol sequence g₀,g₁,g₂,...,g_{F-1} may also be referred to as a modulation symbol sequence g₀,g₁,g₂,*...*,g_{F*-*1}.

Parameters F in the symbol sequence g₀,g₁,g₂,...,g_{F-1} and the symbol sequence *h*₀,*h*₁,*h*₂,*...*,*h*_{F*-*1} meet F=P*Q, where P and Q are positive integers, and * represents multiplication. Q may be equal to a quantity of subcarriers in one time domain symbol, and P may be a quantity of time domain symbols. In a possible example, a value of P may be equal to a value of N in this embodiment of this application.

Herein, g*_{p+q*P} = h_{p*Q+q},* g*_{p+q*P}* is a (*p + q * P*)^{th} element in the symbol sequence g₀,g₁,g₂,...,g_{F-1}, and *h_{p*Q+q}* is a (p * *Q* + *q*)^{th} element in the symbol sequence *h*₀,*h*₁,*h*₂,*...*,*h*_{F*-*1}. A value range of q is [0, (Q-1)], and a value range of p is [0, (P-1)].

For example, a value of P is 71, and a value of Q is 1584. A value range of q is [0, (Q-1)], a value range of p is [0, (P-1)], and q and p are positive integers.

The following provides several examples for ease of understanding.

Example 1: When the value of p is 0 and the value of q is 0, h₀=g₀, that is, h₀ (h₀ is a 0^{th} element in the symbol sequence *h*₀,*h*₁,*h*₂,*...*,*h*_{F*-*1}) in the symbol sequence *h*₀,*h*₁,*h*₂,*...*,*h*_{F*-*1} is mapped to g₀ (g₀ is a 0^{th} element in the symbol sequence g₀,g₁,g₂,...,g_{F-1}) in the symbol sequence g₀,g₁,g₂,...,g_{F-1}.

Example 2: When the value of p is 0 and the value of q is 1, h₁=g₇₁, that is, h₁ (h₁ is a first element in the symbol sequence *h*₀,*h*₁,*h*₂,*...*,*h*_{F*-*1}) in the symbol sequence *h*₀,*h*₁,*h*₂,*...*,*h*_{F*-*1} is mapped to g₁₂ (g₁₂ is a 71^{st} element in the symbol sequence g₀,g₁,g₂,...,g_{F-1}) in the symbol sequence g₀,g₁,g₂,...,g_{F-1}.

Example 3: When the value of p is 0 and the value of q is 2, h₂=g₁₄₂, that is, h₂ (h₂ is a second element in the symbol sequence *h*₀,*h*₁,*h*₂,*...*,*h*_{F*-*1}) in the symbol sequence *h*₀,*h*₁,*h*₂,*...*,*h*_{F*-*1} is mapped to g₂₄ (g₂₄ is a 142^{nd} element in the symbol sequence g₀,g₁,g₂,...,g_{F-1}) in the symbol sequence g₀,g₁,g₂,...,g_{F-1}. The rest may be deduced by analogy, and details are not described again.

In this embodiment of this application, the parameters in the symbol sequence *h*₀,*h*₁,*h*₂,*...*,*h*_{F*-*1} and the symbol sequence g₀,g₁,g₂,g_{F-1} may alternatively meet another condition. For example, when the value range of q is [1, Q] and the value range of p is [1, P], the symbol sequence *h*₀,*h*₁,*h*₂,*...*,*h*_{F*-*1} may be replaced with the symbol sequence *h*₁,*h*₁,*h*₂,*...*,*h*_{F}, and the symbol sequence g₀,g₁,g₂,*...*,g_{F*-*1} may be replaced with the symbol sequence g₁,g₁,g₂,...,g_{F}. g*_{p+q*P} = h_{p*Q+q}* may be replaced with g_{*p+*(*q-*1)}*_{*P} = h*_{(*p-*1)*}*_{Q+q}.* Herein, g_{*p+*(*q-*1)**P*} is a (p *+ (q -* 1) * *P*)^{th}) element in the symbol sequence g₁,g₁,g₂,...,g_{F}, and *h*_{(*p-*1)**Q+q*} is a *((p -* 1) * Q + *q*)^{th} element in the symbol sequence *h*₁,*h*₁,*h*₂,*...*,*h*_{F}. In this example, other parameters may not be changed. For a limitation condition of the other parameters, refer to the foregoing descriptions. Details are not described again.

Implementation C2: The subcarrier interleaving solution is the subcarrier interleaving solution #2 (oblique cyclic interleaving).

Content of the implementation C2 is similar to that of the implementation C1. A difference lies in that in the implementation C2, a subcarrier interleaving manner is oblique cyclic interleaving. In this way, when frequency selective fading is stable for a period of time (a fixed frequency band is interfered with), oblique cyclic interleaving may distribute the fading to different time domain symbols or TBs, to bring better diversity gains and an interference averaging effect, and improve decoding performance of a receive end.

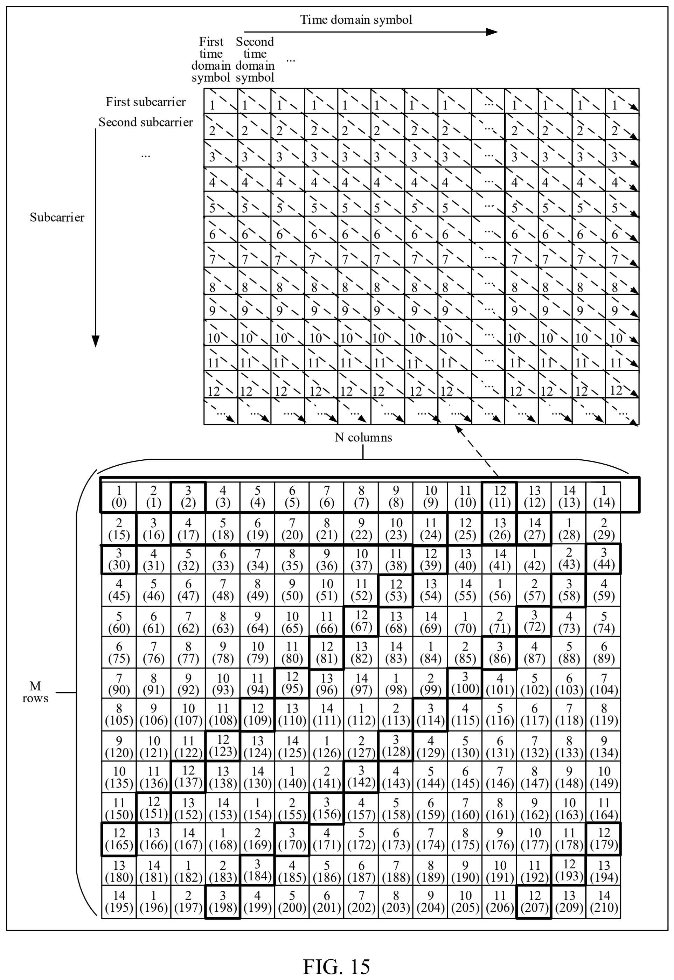

FIG. 15 is an example of a diagram of an interleaver according to an embodiment of this application. For content of FIG. 15, refer to related descriptions of FIG. 14. A difference lies in an order of performing subcarrier interleaving by the base station.

As shown in FIG. 15, subcarrier interleaving is also performed by preferentially mapping a symbol sequence to a time domain resource, and elements (for example, modulation symbols) in the symbol sequence are sequentially placed on subcarriers in each time domain symbol. After subcarrier interleaving is performed on a t^{th} element (for example, a t^{th} modulation symbol) in the symbol sequence, a corresponding location is (x, y), where x is a time domain symbol index value, and y is a subcarrier index value. After subcarrier interleaving is performed on a (t+1)^{th} element in the symbol sequence, a corresponding location is (mod (x, X)+1, mod (y, Y)+1). X is a quantity of time domain symbols included in a j^{th} row, and Y is a quantity of subcarriers included in the time domain symbols included in the j^{th} row. In the foregoing example, a time domain symbol index number and a subcarrier index number start from 1. If the index number starts from 0, a next resource mapping resource is (mod (x+1, X), mod (y+1, Y)).

For example, a first element in the modulation symbol sequence is mapped to a first subcarrier of a first symbol (the subcarrier may be identified as a resource (1, 1)). A second element is mapped to a second subcarrier of a second symbol (the subcarrier may be identified as a resource (2, 2)). A third data element is mapped to a third subcarrier of the third symbol (the subcarrier may be identified as a resource (3, 3)).

In a subcarrier interleaving process, when subcarriers (or referred to as frequency domain resources) in a time domain symbol are mapped, elements in a subsequent symbol sequence may skip the time domain symbol when subcarrier interleaving is performed.

It may be understood that to implement functions in the foregoing embodiments, the base station and the terminal include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

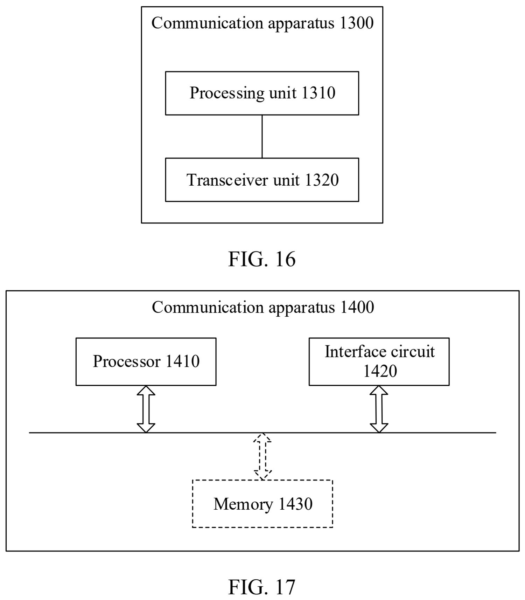

FIG. 16 and FIG. 17 each are a schematic diagram of a possible structure of a communication apparatus according to an embodiment of this application. The communication apparatus may be the first communication apparatus or the second communication apparatus in FIG. 4 or FIG. 10. These communication apparatuses may be configured to implement the function of the terminal or the base station in the foregoing method embodiments, and therefore can also achieve beneficial effects of the foregoing method embodiments. In this embodiment of this application, the communication apparatus may be one of the terminals 120a to 120j shown in FIG. 1, or may be the base station 110a or 110b shown in FIG. 1, or may be a module (such as a chip) used in the terminal or the base station.

As shown in FIG. 16, the communication apparatus 1300 includes a processing unit 1310 and a transceiver unit 1320. The communication apparatus 1300 is configured to implement functions of the terminal or the base station in the method embodiment shown in FIG. 4 or FIG. 10.

When the communication apparatus 1300 is configured to implement the functions of the terminal in the method embodiment shown in FIG. 4 or FIG. 10, the processing unit 1310 is configured to: receive first data through the transceiver unit 1320; and obtain second data and third data from the first data.

When the communication apparatus 1300 is configured to implement the functions of the terminal in the method embodiment shown in FIG. 4 or FIG. 10, in a possible implementation, the processing unit 1310 is configured to: de-interleave a symbol sequence *f*₀, *f*₁, *f*₂,*...*, *f*_{*E-*1} into a symbol sequence *e*₀,*e*₁,*e*₂,*...*,*e*_{*E-*1}*.*

When the communication apparatus 1300 is configured to implement the functions of the terminal in the method embodiment shown in FIG. 4 or FIG. 10, in a possible implementation, the processing unit 1310 is further configured to obtain first information.

When the communication apparatus 1300 is configured to implement the functions of the terminal in the method embodiment shown in FIG. 4 or FIG. 10, in a possible implementation, the processing unit 1310 is further configured to obtain configuration information.

When the communication apparatus 1300 is configured to implement the functions of the terminal in the method embodiment shown in FIG. 4 or FIG. 10, in a possible implementation, the processing unit 1310 is further configured to: obtain an association relationship between a bandwidth part BWP and a second parameter, and determine, based on the association relationship between the BWP and the second parameter and a BWP used by the first communication apparatus, a second parameter used to de-interleave the first data.

When the communication apparatus 1300 is configured to implement the functions of the terminal in the method embodiment shown in FIG. 4 or FIG. 10, in a possible implementation, the processing unit 1310 is further configured to: perform subcarrier de-interleaving on a symbol sequence g₀,g₁,g₂,*...*,g_{F*-*1} corresponding to the first data, to obtain a symbol sequence *h*₀,*h*₁,*h*₂,*...*,*h*_{F*-*1}.

When the communication apparatus 1300 is configured to implement the functions of the base station in the method embodiment shown in FIG. 4 or FIG. 10, the processing unit 1310 is configured to: obtain the first data, and send the first data by using the transceiver unit 1320.

When the communication apparatus 1300 is configured to implement the functions of the base station in the method embodiment shown in FIG. 4 or FIG. 10, in a possible implementation, the processing unit 1310 is further configured to: interleave the symbol sequence *e*₀,*e*₁,*e*₂,*...*,*e*_{*E-*1} into the symbol sequence *f*₀, *f*₁, *f*₂,*...*, *f*_{*E-*1}*.*

When the communication apparatus 1300 is configured to implement the functions of the base station in the method embodiment shown in FIG. 4 or FIG. 10, in a possible implementation, the processing unit 1310 is further configured to obtain first information.

When the communication apparatus 1300 is configured to implement the functions of the base station in the method embodiment shown in FIG. 4 or FIG. 10, in a possible implementation, the processing unit 1310 is further configured to obtain configuration information.

When the communication apparatus 1300 is configured to implement the functions of the base station in the method embodiment shown in FIG. 4 or FIG. 10, in a possible implementation, the processing unit 1310 is further configured to: obtain an association relationship between a bandwidth part BWP and a second parameter, and determine, based on the association relationship between the BWP and the second parameter and a BWP used by the first communication apparatus, a second parameter used to interleave the symbol sequence corresponding to the first data.

When the communication apparatus 1300 is configured to implement the functions of the base station in the method embodiment shown in FIG. 4 or FIG. 10, in a possible implementation, the processing unit 1310 is further configured to perform subcarrier interleaving on a symbol sequence *h*₀,*h*₁,*h*₂,*...*,*h*_{F*-*1} corresponding to the first data, to obtain a symbol sequence g₀,g₁,g₂,*...*,g_{F*-*1}.

For more detailed descriptions of the processing unit 1310 and the transceiver unit 1320, directly refer to related descriptions in the method embodiment shown in FIG. 4 or FIG. 10. Details are not described herein again.

As shown in FIG. 17, the communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 4 or FIG. 10, the processor 1410 is configured to implement a function of the processing unit 1310, and the interface circuit 1420 is configured to implement a function of the transceiver unit 1320.

When the communication apparatus is a chip used in a terminal, the chip in the terminal implements a function of the terminal in the foregoing method embodiment. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applicable to a first communication apparatus, and the method comprises:
receiving first data; and
obtaining second data and third data from the first data, wherein the first data comprises a first transport block, the first transport block comprises the second data and the third data, the second data is mapped to an r^{th} time domain symbol in a first slot, the third data is mapped to an s^{th} time domain symbol in a second slot, r and s are positive integers, and r is not equal to s.

2. The method according to claim 1, wherein after receiving the first data, the method further comprises:
de-interleaving a symbol sequence *f*₀, *f*₁, *f*₂,*...*, *f*_{*E-*1} into a symbol sequence *e*₀,*e*₁,*e*₂,*...*,*e*_{*E-*1}, wherein the first data comprises the symbol sequence *f*₀, *f*₁, *f*₂,*...*, *f*_{*E-*1}, E=N*M, N=a*M+k, N is 0 or a positive integer, M is 0 or a positive integer, a and k are positive integers, and * represents multiplication; and
*e_{i*M+j} = f_{i+j*N},* wherein *f_{i+j*N}* is an (i+j*N)^{th} element in the symbol sequence *f*₀, *f*₁, *f*₂,*...*, *f*_{*E-*1}, *e_{i*M+j}* is an (i*M+j)^{th} element in the symbol sequence *e*₀,*e*₁,*e*₂,*...*,*e*_{*E-*1}, a value range of j is [0, (M-1)], a value range of i is [0, (N-1)], and j and i are positive integers.

3. The method according to claim 1 or 2, wherein the method further comprises:
obtaining information that indicates at least one of the following:
start time for de-interleaving a symbol sequence corresponding to received data;
stop time for de-interleaving a symbol sequence corresponding to received data;
duration for de-interleaving a symbol sequence corresponding to received data;
start time for interleaving a symbol sequence corresponding to to-be-sent data;
stop time for interleaving a symbol sequence corresponding to to-be-sent data; or
duration for interleaving a symbol sequence corresponding to to-be-sent data.

4. The method according to any one of claims 1 to 3, wherein the method further comprises:
obtaining configuration information, wherein the configuration information comprises information that indicates at least one of the following:
a first parameter, wherein the first parameter is used to de-interleave a symbol sequence corresponding to the first data;
time domain resource information of the first data;
frequency domain resource information of the first data;
polarization information of the first data;
de-interleaving the symbol sequence corresponding to the received data; or
interleaving the symbol sequence corresponding to the to-be-sent data.

5. The method according to any one of claims 1 to 4, wherein after receiving the first data, the method further comprises:
obtaining an association relationship between a bandwidth part BWP and a second parameter, wherein the second parameter comprises at least one of the following: the first parameter, the time domain resource information of the first data, the frequency domain resource information of the first data, the polarization information of the first data, or information that indicates to de-interleave the symbol sequence corresponding to the first data, and the first parameter is used to de-interleave the symbol sequence corresponding to the first data; and
determining, based on the association relationship between the BWP and the second parameter and a BWP used by the first communication apparatus, the second parameter used to de-interleave the first data.

6. The method according to any one of claims 1 to 5, wherein after receiving the first data, the method further comprises:
performing subcarrier de-interleaving on the symbol sequence g₀,g₁,g₂,...,g_{F-1} corresponding to the first data to obtain a symbol sequence *h*₀,*h*₁,*h*₂,*...*,*h*_{F*-*1}, wherein F=P*Q, P and Q are positive integers, and * represents multiplication; and
*h_{p*Q+q} =* g*_{p+q*P}*, wherein g*_{p+q*P}* is a (p+j*P)^{th} element in the symbol sequence g₀,g₁,g₂,...,g_{F-1}, *h_{p*Q+q}* is a (p*Q+q)^{th} element in the symbol sequence *h*₀,*h*₁,*h*₂,*...*,*h*_{F*-*1}, a value range of q is [0, (Q-1)], a value range of p is [0, (P-1)], and q and p are positive integers.

7. A communication method, wherein the method is applicable to a second communication apparatus, and the method comprises:
obtaining first data; and
sending the first data, wherein the first data comprises a first transport block, the first transport block comprises second data and third data, the second data is mapped to an r^{th} time domain symbol in a first slot, the third data is mapped to an s^{th} time domain symbol in a second slot, r and s are positive integers, and r is not equal to s.

8. The method according to claim 7, wherein before obtaining the first data, the method further comprises:
interleaving a symbol sequence *e*₀,*e*₁,*e*₂,*...*,*e*_{*E-*1} into a symbol sequence *f*₀, *f*₁, *f*₂,*...*, *f*_{*E-*1}, wherein the first data comprises the symbol sequence *f*₀, *f*₁, *f*₂,*...*, *f*_{*E-*1}, E=N*M, N=a*M+k, N is 0 or a positive integer, M is 0 or a positive integer, a and k are positive integers, and * represents multiplication; and
*f_{i+j*N} = e_{i*M+j}*, wherein *f_{i+j*N}* is an (i+j*N)^{th} element in the symbol sequence *f*₀, *f*₁, *f*₂,*...*, *f*_{*E-*1}, *e_{i*M+j}* is an (i*M+j)^{th} element in the symbol sequence *e*₀,*e*₁,*e*₂,*...*,*e*_{*E-*1}, a value range of j is [0, (M-1)], a value range of i is [0, (N-1)], and j and i are positive integers.

9. The method according to claim 7 or 8, wherein the method further comprises:
obtaining information that indicates at least one of the following:
start time for de-interleaving a symbol sequence corresponding to received data;
stop time for de-interleaving a symbol sequence corresponding to received data;
duration for de-interleaving a symbol sequence corresponding to received data;
start time for interleaving a symbol sequence corresponding to to-be-sent data;
stop time for interleaving a symbol sequence corresponding to to-be-sent data; or
duration for interleaving a symbol sequence corresponding to to-be-sent data.

10. The method according to any one of claims 7 to 9, wherein the method further comprises:
obtaining configuration information, wherein the configuration information comprises information that indicates at least one of the following:
a first parameter, wherein the first parameter is used to de-interleave a symbol sequence corresponding to the first data;
time domain resource information of the first data;
frequency domain resource information of the first data;
polarization information of the first data;
de-interleaving the symbol sequence corresponding to the received data; or
interleaving the symbol sequence corresponding to the to-be-sent data.

11. The method according to any one of claims 7 to 10, wherein before obtaining the first data, the method further comprises:
obtaining an association relationship between a bandwidth part BWP and a second parameter, wherein the second parameter comprises at least one of the following: the first parameter, the time domain resource information of the first data, the frequency domain resource information of the first data, the polarization information of the first data, or information that indicates to interleave the symbol sequence corresponding to the first data, and the first parameter is used to de-interleave the symbol sequence corresponding to the first data; and
determining, based on an association relationship between the BWP and a second parameter and a BWP used by the first communication apparatus, the second parameter used to interleave the symbol sequence corresponding to the first data.

12. The method according to any one of claims 7 to 11, wherein before obtaining the first data, the method further comprises:
performing subcarrier interleaving on the symbol sequence *h*₀,*h*₁,*h*₂,*...*,*h*_{F-1} corresponding to the first data to obtain a symbol sequence g₀,g₁,g₂,...,g_{F-1}, wherein F=P*Q, P and Q are positive integers, and * represents multiplication; and
g*_{p+q*P} = h_{p*Q+q},* wherein g*_{p+q*P}* is a (p+j*P)^{th} element in the symbol sequence g₀,g₁,g₂,...,g_{F-1}, *h_{p*Q+q}* is a (p*Q+q)^{th} element in the symbol sequence *h*₀,*h*₁*,h*₂,...,*h*_{F-1}, a value range of q is [0, (Q-1)], a value range of p is [0, (P-1)], and q and p are positive integers.

13. A communication apparatus, wherein the apparatus is a first communication apparatus, and the apparatus comprises a processor and an interface circuit; and
the processor is configured to:
receive first data through the interface circuit; and
obtain second data and third data from the first data, wherein the first data comprises a first transport block, the first transport block comprises the second data and the third data, the second data is mapped to an r^{th} time domain symbol in a first slot, the third data is mapped to an s^{th} time domain symbol in a second slot, r and s are positive integers, and r is not equal to s.

14. The apparatus according to claim 13, wherein the processor is further configured to:
de-interleave a symbol sequence *f*₀,*f*₁*,f₂,...*,*f*_{*E*-1} into a symbol sequence *e*₀,*e*₁,*e*₂,...,*e*_{*E*-1}, wherein the first data comprises the symbol sequence *f*₀,*f*₁,*f*₂,...*,f*_{*E*-1}, E=N*M, N=a*M+k, N is 0 or a positive integer, M is 0 or a positive integer, a and k are positive integers, and * represents multiplication; and
*e_{i*M+j} = f_{i+j*N},* wherein *f_{i+j*N}* is an (i+j*N)^{th} element in the symbol sequence *f*₀,*f*₁*, f₂,...,f*_{*E*-1}, *e_{i*M+j}* is an (i*M+j)^{th} element in the symbol sequence *e*₀,*e*₁,*e*₂,*.*..,*e*_{*E*-1}, a value range of j is [0, (M-1)], a value range of i is [0, (N-1)], and j and i are positive integers.

15. The apparatus according to claim 13 or 14, wherein the processor is further configured to:
obtain information that indicates at least one of the following:
start time for de-interleaving a symbol sequence corresponding to received data;
stop time for de-interleaving a symbol sequence corresponding to received data;
duration for de-interleaving a symbol sequence corresponding to received data;
start time for interleaving a symbol sequence corresponding to to-be-sent data;
stop time for interleaving a symbol sequence corresponding to to-be-sent data; or
duration for interleaving a symbol sequence corresponding to to-be-sent data.

16. The apparatus according to any one of claims 13 to 15, wherein the processor is further configured to:
obtain configuration information, wherein the configuration information comprises information that indicates at least one of the following:
a first parameter, wherein the first parameter is used to de-interleave a symbol sequence corresponding to the first data;
time domain resource information of the first data;
frequency domain resource information of the first data;
polarization information of the first data;
de-interleaving the symbol sequence corresponding to the received data; or
interleaving the symbol sequence corresponding to the to-be-sent data.

17. The apparatus according to any one of claims 13 to 16, wherein the processor is further configured to:
obtain an association relationship between a bandwidth part BWP and a second parameter, wherein the second parameter comprises at least one of the following: the first parameter, the time domain resource information of the first data, the frequency domain resource information of the first data, the polarization information of the first data, or information that indicates to de-interleave the symbol sequence corresponding to the first data, and the first parameter is used to de-interleave the symbol sequence corresponding to the first data; and
determine, based on the association relationship between the BWP and the second parameter and a BWP used by the first communication apparatus, the second parameter used to de-interleave the first data.

18. The apparatus according to any one of claims 13 to 17, wherein the processor is further configured to:
perform subcarrier de-interleaving on the symbol sequence g₀,g₁,g₂,...,g_{F-1} corresponding to the first data to obtain a symbol sequence *h*₀,*h*₁,*h*₂,...,*h*_{F-1}, wherein F=P*Q, P and Q are positive integers, and * represents multiplication; and
*h_{p*Q+q} = g_{p+q*P}*, wherein g*_{p+q*P}* is a (p+j*P)^{th} element in the symbol sequence g₀,g₁,g₂,..., g_{F-1}, *h_{p*Q+q}* is a (p*Q+q)^{th} element in the symbol sequence *h*₀,*h*₁*,h₂,*...,*h*_{F-1}, a value range of q is [0, (Q-1)], a value range of p is [0, (P-1)], and q and p are positive integers.

19. A communication apparatus, wherein the apparatus is a second communication apparatus, and the apparatus comprises a processor and an interface circuit; and
the processor is configured to:
obtain first data; and
send the first data through the interface circuit, wherein the first data comprises a first transport block, the first transport block comprises second data and third data, the second data is mapped to an r^{th} time domain symbol in a first slot, the third data is mapped to an s^{th} time domain symbol in a second slot, r and s are positive integers, and r is not equal to s.

20. The apparatus according to claim 19, wherein the processor is further configured to:
interleave a symbol sequence *e*₀,*e*₁,*e*₂,...,*e*_{*E*-1} into a symbol sequence *f*₀*,f*₁, *f*₂*,*...,*f*_{*E*-1}, wherein the first data comprises the symbol sequence *f*₀,*f*₁*,f*₂,...*,f*_{*E*-1}, E=N*M, N=a*M+k, N is 0 or a positive integer, M is 0 or a positive integer, a and k are positive integers, and * represents multiplication; and
*f_{i+j*N} = e*_{*i*M*+}*ⱼ,* wherein *f*_{*i*+*j*N*} is an (i+j*N)^{th} element in the symbol sequence *f*₀,*f*₁,*f*₂,...,*f*_{*E*-1}, *e_{i*M+j}* is an (i*M+j)^{th} element in the symbol sequence *e*₀,*e*₁,*e*₂,..., *e*_{*E*-1}, a value range of j is [0, (M-1)], a value range of i is [0, (N-1)], and j and i are positive integers.

21. The apparatus according to claim 19 or 20, wherein the processor is further configured to:
obtain information that indicates at least one of the following:
start time for de-interleaving a symbol sequence corresponding to received data;
stop time for de-interleaving a symbol sequence corresponding to received data;
duration for de-interleaving a symbol sequence corresponding to received data;
start time for interleaving a symbol sequence corresponding to to-be-sent data;
stop time for interleaving a symbol sequence corresponding to to-be-sent data; or
duration for interleaving a symbol sequence corresponding to to-be-sent data.

22. The apparatus according to any one of claims 19 to 21, wherein the processor is further configured to:
obtain configuration information, wherein the configuration information comprises information that indicates at least one of the following:
a first parameter, wherein the first parameter is used to de-interleave a symbol sequence corresponding to the first data;
time domain resource information of the first data;
frequency domain resource information of the first data;
polarization information of the first data;
de-interleaving the symbol sequence corresponding to the received data; or
interleaving the symbol sequence corresponding to the to-be-sent data.

23. The apparatus according to any one of claims 19 to 22, wherein the processor is further configured to:
obtain an association relationship between a bandwidth part BWP and a second parameter, wherein the second parameter comprises at least one of the following: the first parameter, the time domain resource information of the first data, the frequency domain resource information of the first data, the polarization information of the first data, or information that indicates to interleave the symbol sequence corresponding to the first data, and the first parameter is used to de-interleave the symbol sequence corresponding to the first data; and
determine, based on the association relationship between the BWP and the second parameter and a BWP used by the first communication apparatus, the second parameter used to interleave the symbol sequence corresponding to the first data.

24. The apparatus according to any one of claims 19 to 23, wherein the processor is further configured to:
perform subcarrier interleaving on the symbol sequence *h*₀,*h*₁*,h*₂,...,*h*_{F-1} corresponding to the first data to obtain a symbol sequence g₀,g₁,g₂,...,g_{F-1}, wherein F=P*Q, P and Q are positive integers, and * represents multiplication; and
g*_{p+q*P}* = *h*_{*p*Q*+*q*}, wherein g*_{p+q*P}* is a (p+j*P)^{th} element in the symbol sequence g₀,g₁,g₂,...,g_{F-1}, *h_{p*Q+q}* is a (p*Q+q)^{th} element in the symbol sequence *h*₀,*h*₁*,h*₂,...,*h*_{*F*-1}, a value range of q is [0, (Q-1)], a value range of p is [0, (P-1)], and q and p are positive integers.

25. A communication apparatus, comprising a processor and a memory, wherein
the memory is configured to store a computer program or instructions; and
the processor is configured to execute the computer program or the instructions in the memory, to perform the method according to any one of claims 1 to 6, or perform the method according to any one of claims 7 to 12.

26. A communication apparatus, comprising a processing unit and a communication unit, wherein the processing unit is configured to perform the method according to any one of claims 1 to 6 or the method according to any one of claims 7 to 12 through the communication unit.

27. A computer-readable storage medium, wherein the computer-readable storage medium stores computer-executable instructions, and when the computer-executable instructions are invoked by a computer, the method according to any one of claims 1 to 6 is performed, or the method according to any one of claims 7 to 12 is performed.

28. A chip system, wherein the chip system comprises at least one processor and an interface circuit, the interface circuit and the at least one processor are interconnected through a line, and the processor runs instructions, to perform the method according to any one of claims 1 to 6 or perform the method according to any one of claims 7 to 12.

29. A computer program product, wherein the computer program product stores a computer program, the computer program comprises program instructions, and when the program instructions are executed by a computer, the computer is enabled to perform the method according to any one of claims 1 to 6, or perform the method according to any one of claims 7 to 12.
